# EUROPEAN PATENT APPLICATION

(11) **EP 4 236 585 A1**
(43) Date of publication of application: **30.08.2023**
(21) Application number: 20959273.2
(22) Date of filing: 30.10.2020
(51) Int. Cl.: H04W 76/11

(54) **METHOD, APPARATUS AND SYSTEM FOR RELEASING F1 CONNECTION**

(71) Applicant: Huawei Technologies Co., Ltd., Shenzhen, Guangdong 518129 (CN)
(72) Inventor: LIU, Jing, Shenzhen, Guangdong 518129 (CN); ZHU, Yuanping, Shenzhen, Guangdong 518129 (CN); SHI, Yulong, Shenzhen, Guangdong 518129 (CN)
(74) Representative: Huawei European IPR
(86) International application number: PCT/CN2020/125593
(87) International publication number: WO 2022/088112

(57) **Abstract**

Embodiments of this application provide a method and apparatus for releasing an F1 connection, and a system. The method is used for an IAB node. The method includes: receiving a first message from a source IAB donor node, where the first message indicates that a central unit CU of an IAB donor node connected to the IAB node changes; and releasing an F1 connection to a CU of the source IAB donor node according to the first message. Therefore, the IAB node in this application can release the F1 connection in time based on an indication of the source IAB donor. This avoids resource waste caused because the F1 connection is not released in time, or terminal service interruption caused because the F1 connection is relased prematurely but a new F1 connection is not set up, so that reliability of releasing the F1 connection is improved, and IAB communication performance is ensured.

## Description

### TECHNICAL FIELD

This application relates to the communication field, and in particular, to a method and apparatus for releasing an F1 connection, and a system.

### BACKGROUND

In 3rd generation partnership project (3rd Generation Partnership Project, 3GPP) release 15 (Release-15, Rel-15) new radio (New Radio, NR), a next generation NodeB (next generation node base station, gNB) may use a central unit (Central Unit, CU)-distributed unit (Distributed Unit, DU) split architecture. To be specific, the gNB includes one gNB-CU and one or more gNB-DUs.

Two types of nodes: an IAB node (referred to as an IAB node) and an IAB donor (referred to an IAB donor node or a donor IAB node) are introduced to 3GPP Rel-15 integrated access and backhaul (Integrated Access and Backhaul, IAB). The IAB donor may be a gNB.

Mobility refers to handover of user equipment (User Equipment, UE) from one cell to another cell, and therefore may also be referred to as handover generally. A general name of handover is used in this application.

3GPP Rel-16 IAB considers only an intra-donor-CU (intra-donor-CU) handover scenario instead of an inter-donor-CU (inter-donor-CU) handover scenario, and does not disclose an optimization solution to releasing a source F1 connection between an IAB node and a source IAB donor-CU in the inter-donor-CU handover scenario.

### SUMMARY

Embodiments of this application provide a method and apparatus for releasing an F1 connection, and a system, so that in an inter-CU handover scenario, an IAB node (including a handover IAB node and a downstream IAB node of the handover IAB node) can determine, based on an indication of a source IAB donor, that a CU of a donor node connected to the IAB node changes. Therefore, the IAB node can release an F1 connection in a timely manner. This avoids resource waste caused because the F1 connection is not released in time, or terminal service interruption caused because the F1 connection is relased prematurely but a new F1 connection is not set up, so that reliability of releasing the F1 connection is improved, and IAB communication performance is ensured.

According to a first aspect, an embodiment of this application provides a method for releasing an F1 connection. The method is used for an integrated access and backhaul IAB node. The method includes:
receiving a first message from a source IAB donor node, where the first message indicates that a central unit CU of an IAB donor node connected to the IAB node changes; and
releasing an F1 connection to a CU of the source IAB donor node according to the first message, where
the source IAB donor node is an IAB donor node connected to the IAB node before the CU of the IAB donor node connected to the IAB node changes.

The F1 connection between the IAB node and the CU of the source IAB donor node may be referred to as a source F1 connection.

In a possible implementation, the first message includes first information, and the first information indicates that the CU of the IAB donor node connected to the IAB node changes or inter-donor CU handover occurs.

In a possible implementation, the first message is an F1 application protocol F1AP message.

In a possible implementation, the receiving a first message from a source IAB donor node includes:
receiving the first message from the source IAB donor node through a target IAB donor node, where
the target IAB donor node is an IAB donor node connected to the IAB node after the CU of the IAB donor node connected to the IAB node changes.

In a possible implementation, the receiving the first message from the source IAB donor node through a target IAB donor node includes:
setting up a first TNL association with the source IAB donor node based on an IP address allocated by the target IAB donor node to the IAB node; and
receiving the first message from the source IAB donor node through the target IAB donor node based on the first TNL association.

In a possible implementation, the first message further includes second information, and the second information includes an IP address allocated by the source IAB donor node to the IAB node and/or an identifier of the CU of the source IAB donor node.

In a possible implementation, the receiving the first message from the source IAB donor node through a target IAB donor node includes:
setting up a second TNL association with the source IAB donor node based on an IP address allocated by the source IAB donor node to the IAB node; and
receiving the first message from the source IAB donor node through the target IAB donor node based on the second TNL association.

In a possible implementation, the first message includes an inner IP header and an outer IP header, an IP address of the IAB node included in the inner IP header corresponds to the source IAB donor node, and an IP address of the IAB node included in the outer IP header corresponds to the target IAB donor node.

In a possible implementation, the releasing an F1 connection to a CU of the source IAB donor node according to the first message includes:
starting a timer; and
releasing the F1 connection to the CU of the source IAB donor node after the timer expires.

In a possible implementation, the first message further includes information about duration of the timer.

According to a second aspect, an embodiment of this application provides a method for releasing an F1 connection. The method is used for a source integrated access and backhaul IAB donor node. The method includes:
determining a first message, where the first message indicates that a central unit CU of an IAB donor node connected to an IAB node changes; and
sending the first message to the IAB node, to release an F1 connection between the IAB node and a CU of the source IAB donor node, where
the source IAB donor node is an IAB donor node connected to the IAB node before the CU of the IAB donor node connected to the IAB node changes.

In a possible implementation, the first message includes first information, and the first information indicates that the CU of the IAB donor node connected to the IAB node changes or inter-donor CU handover occurs.

In a possible implementation, the first message is an F1 application protocol F1AP message.

In a possible implementation, the sending the first message to the IAB node includes:
sending the first message to the IAB node through a target IAB donor node, where
the target IAB donor node is an IAB donor node connected to the IAB node after the CU of the IAB donor node connected to the IAB node changes.

In a possible implementation, the sending the first message to the IAB node through a target IAB donor node includes:
setting up a first TNL association with the IAB node, where the first TNL association corresponds to an IP address allocated by the target IAB donor node to the IAB node; and
sending the first message to the IAB node through the target IAB donor node based on the first TNL association.

In a possible implementation, the first message further includes second information, and the second information includes an IP address allocated by the source IAB donor node to the IAB node and/or an identifier of the CU of the source IAB donor node.

In a possible implementation, the sending the first message to the IAB node through a target IAB donor node includes:
setting up a second TNL association with the IAB node, where the second TNL association corresponds to an IP address allocated by the source IAB donor node to the IAB node; and
sending the first message to the IAB node through the target IAB donor node based on the second TNL association.

In a possible implementation, the method further includes:
sending, to a CU of the target IAB donor node, the IP address allocated by the source IAB donor node to the IAB node, where the IP address allocated by the source IAB donor node to the IAB node is used for determining a mapping relationship, where
the mapping relationship is a correspondence between the IP address allocated by the source IAB donor node to the IAB node and a backhaul adaptation protocol BAP address allocated by the target IAB donor node to the IAB node.

In a possible implementation, the first message includes an inner IP header and an outer IP header, an IP address of the IAB node included in the inner IP header corresponds to the target IAB donor node, and an IP address of the IAB node included in the outer IP header corresponds to the source IAB donor node.

In a possible implementation, the first message further includes information about duration of a timer.

According to a third aspect, an embodiment of this application provides an apparatus for releasing an F1 connection. The apparatus is used in an integrated access and backhaul IAB node. The apparatus includes:
a receiving module, configured to receive a first message from a source IAB donor node, where the first message indicates that a central unit CU of an IAB donor node connected to the IAB node changes; and
a release module, configured to release an F 1 connection to a CU of the source IAB donor node according to the first message, where
the source IAB donor node is an IAB donor node connected to the IAB node before the CU of the IAB donor node connected to the IAB node changes.

According to a fourth aspect, an embodiment of this application provides an apparatus for releasing an F1 connection. The apparatus is used in a source integrated access and backhaul IAB donor node. The apparatus includes:
a determining module, configured to determine a first message, where the first message indicates that a CU of an IAB donor node connected to an IAB node changes; and
a sending module, configured to send the first message to the IAB node, to release an F1 connection between the IAB node and a CU of the source IAB donor node, where
the source IAB donor node is an IAB donor node connected to the IAB node before the CU of the IAB donor node connected to the IAB node changes.

According to a fifth aspect, an embodiment of this application provides a communication apparatus. The communication apparatus includes a processor. The processor is coupled to a memory. The memory is configured to store computer instructions. The processor is configured to execute the computer instructions, to perform the method according to the first aspect.

According to a sixth aspect, an embodiment of this application provides a communication apparatus. The communication apparatus includes a processor. The processor is coupled to a memory. The memory is configured to store computer instructions. The processor is configured to execute the computer instructions, to perform the method according to the second aspect.

According to a seventh aspect, an embodiment of this application provides a communication system. The communication system includes two or more of an IAB node, a source IAB donor node, and a target IAB donor node. The IAB node is configured to perform the method according to the first aspect; and the source IAB donor node is configured to perform the method according to the second aspect.

According to an eighth aspect, an embodiment of this application provides a computer storage medium. The computer storage medium includes computer instructions. When the computer instructions are run, the method according to the first aspect is performed.

According to a ninth aspect, an embodiment of this application provides a computer storage medium. The computer storage medium includes computer instructions. When the computer instructions are run, the method according to the second aspect is performed.

According to a tenth aspect, an embodiment of this application provides an apparatus. The apparatus is configured to perform the methods according to the first aspect and the second aspect. Embodiments of this application provide the method for releasing an F1 connection, the apparatus, and the system. The first message is determined, where the first message indicates that the CU of the IAB donor node connected to the IAB node changes, and the first message is sent to the IAB node. In this way, the IAB node releases the F1 connection to the CU of the source IAB donor node according to the first message. Therefore, the IAB node releases the source F1 connection in a timely manner based on the indication of the source IAB donor. This avoids resource waste caused because the F 1 connection is not released in time, or communication interruption caused because the F 1 connection is relased prematurely, so that reliability and efficiency of releasing the source F1 connection is improved.

### BRIEF DESCRIPTION OF DRAWINGS

FIG. 1 is a schematic diagram of a CU-DU split structure;
FIG. 2 is a schematic diagram of a control plane protocol stack in a CU-DU split structure;
FIG. 3 is a schematic diagram of a user plane protocol stack in a CU-DU split structure;
FIG. 4 is a schematic diagram of a two-hop data backhaul scenario;
FIG. 5 is a schematic diagram of a control plane protocol stack for two-hop data backhaul;
FIG. 6 is a schematic diagram of a user plane protocol stack for two-hop data backhaul;
FIG. 7 is a schematic diagram of an intra-CU handover scenario;
FIG. 8A and FIG. 8B are a schematic diagram of an intra-CU handover procedure;
FIG. 9 is a schematic diagram of an inter-CU handover scenario according to an embodiment of this application;
FIG. 10 is a schematic diagram of another inter-CU handover scenario according to an embodiment of this application;
FIG. 11 is a schematic diagram of still another inter-CU handover scenario according to an embodiment of this application;
FIG. 12 is a schematic diagram of a method for releasing an F1 connection according to an embodiment of this application;
FIG. 13 is a schematic diagram of a method for releasing an F1 connection according to an embodiment of this application;
FIG. 14 is a schematic diagram of an architecture of a protocol stack according to an embodiment of this application;
FIG. 15 is a schematic diagram of a method for releasing an F1 connection according to an embodiment of this application;
FIG. 16 is a schematic diagram of an architecture of a protocol stack according to an embodiment of this application;
FIG. 17 is a schematic diagram of a method for releasing an F1 connection according to an embodiment of this application;
FIG. 18 is a schematic flowchart of a method for releasing an F1 connection according to an embodiment of this application;
FIG. 19 is a schematic flowchart of a method for releasing an F1 connection according to an embodiment of this application;
FIG. 20 is a schematic diagram of a structure of an apparatus for releasing an F1 connection according to an embodiment of this application;
FIG. 21 is a schematic diagram of a structure of an apparatus for releasing an F1 connection according to an embodiment of this application;
FIG. 22 is a schematic diagram of a structure of a communication apparatus according to an embodiment of this application; and
FIG. 23 is a schematic diagram of a structure of a communication device according to an embodiment of this application.

### DESCRIPTION OF EMBODIMENTS

The following describes technical solutions of embodiments in this application with reference to the accompanying drawings. Clearly, the described embodiments are merely some but not all of embodiments of this application.

In descriptions of this specification, "an embodiment", "some embodiments", or the like indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner.

In the descriptions of this specification, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions of embodiments of this application, "a plurality of" means two or more.

In the descriptions of this specification, the terms "first" and "second" are merely intended for description, and shall not be understood as an indication or implication of relative importance or implicit indication of a quantity of indicated technical features. Therefore, a feature limited by "first" or "second" may explicitly or implicitly include one or more features. The terms "include", "have", and their variants all mean "include but are not limited to", unless otherwise specifically emphasized in another manner.

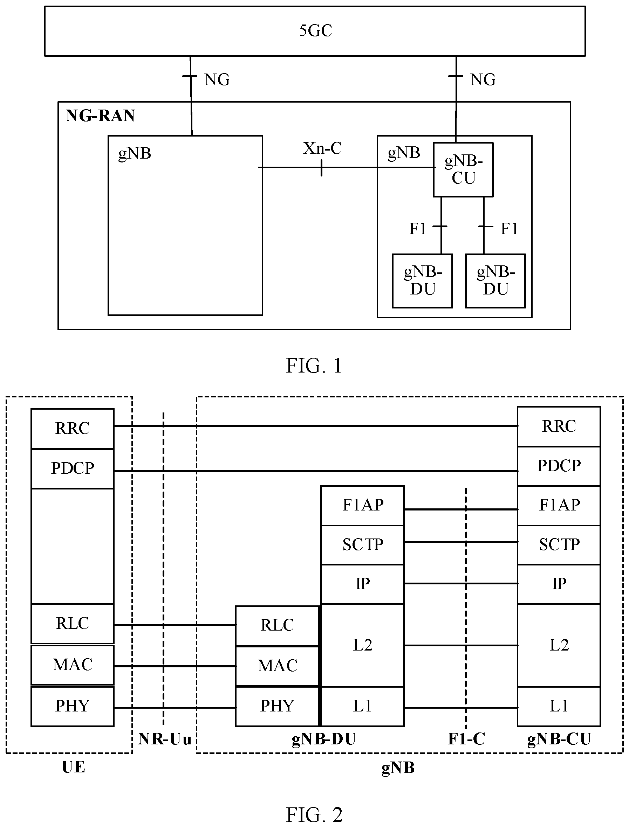

In 3GPP Rel-15 NR, a gNB may use a CU-DU split architecture. To be specific, the gNB includes one gNB-CU and one or more gNB-DUs. As shown in FIG. 1, one gNB-DU can be connected to only one gNB-CU. In addition, the gNB-CU is connected to the gNB-DU through an F1 interface, and the gNB-CU is connected to a 5GC through an NG interface.

The gNB may be a node that provides new radio (New Radio, NR) user plane and control plane transmission for user equipment (User equipment, UE), and includes one or more cells. The gNB is connected to the 5G core (5G Core, 5GC) network through the NG interface, and is connected to another gNB through an Xn interface. An Xn-C interface is used for control-plane signaling transmission between two gNBs, and an Xn-U interface is used for user-plane data transmission between two gNBs. An interface between the gNB and the UE is referred to as a Uu interface.

The gNB-CU may be a logical node, including a radio resource control (Radio Resource Control, RRC) layer, a service data adaptation protocol (Service Data Adaptation Protocol, SDAP) layer, and a packet data convergence protocol (Packet Data Convergence Protocol, PDCP) layer of the gNB, or including an RRC layer and a PDCP layer of an en-gNB, and is configured to control the one or more gNB-DUs.

The gNB-distributed unit (Distributed Unit, DU) may be a logical node, including a radio link control (Radio Link Control, RLC) layer, a media access control (Media Access Control, MAC) layer, and a physical (Physical, PHY) of the gNB or the en-gNB. One gNB-DU supports one or more cells, but one cell can belong to only one gNB-DU.

The UE accesses the gNB-CU through the gNB-DU. To be specific, a function of a peer PHY/MAC/RLC layer of the UE is located on the gNB-DU, and a function of a peer PDCP/SDAP/RRC layer of the UE is located on the gNB-CU.

As shown in FIG. 2, for a control plane (Control Plane, CP), in an uplink (Uplink, UL) direction, a gNB-DU encapsulates, into an F1 application protocol (F1 Application Protocol, F1AP) message of an F1 interface, an RRC message generated by UE, and sends the F1AP message to a gNB-CU. In a downlink (Downlink, DL) direction, a gNB-CU encapsulates an RRC message into an F1AP message, and sends the F1AP message to a gNB-DU; and the gNB-DU extracts the RRC message from the F1AP message, maps the RRC message to a signaling radio bearer (Signaling Radio Bearer, SRB) corresponding to a Uu interface, and sends the SRB to UE. The SRB may be an SRB 0/SRB 1/SRB 2 or the like.

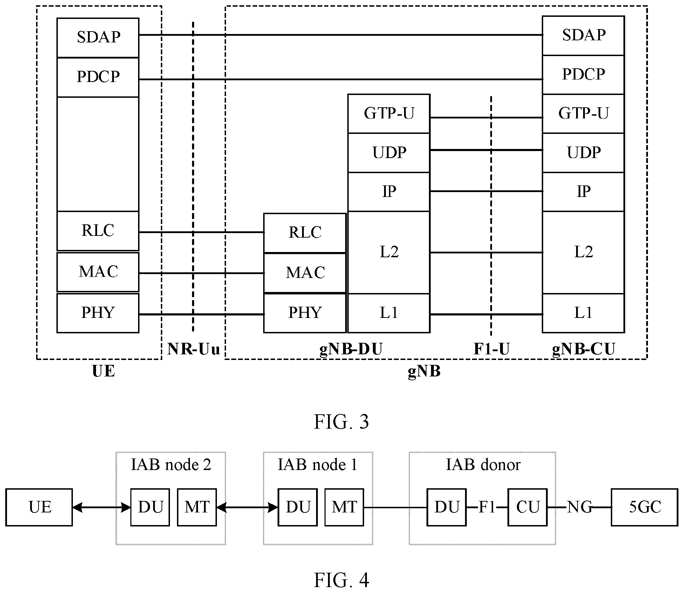

As shown in FIG. 3, for a user plane (User Plane, UP), in a UL direction, a gNB-DU maps, to a corresponding general packet radio service tunneling protocol (General packet radio service Tunneling Protocol, GTP) tunnel, a data packet that is of UE and that is received from a data radio bearer (Data Radio Bearer, DRB) on a Uu interface, and sends the GTP tunnel to a gNB-CU. In a DL direction, a gNB-CU maps a data packet of UE to a corresponding GTP tunnel, and sends the GTP tunnel to a gNB-DU; and the gNB-DU extracts the data packet of the UE from the GTP tunnel, maps the data packet of the UE to a DRB corresponding to a Uu interface, and sends the DRB to the UE.

Two types of nodes: an IAB node (referred to as an IAB node) and an IAB donor (referred to an IAB donor node or a donor IAB node) are introduced to 3GPP Rel-15 IAB. The IAB donor may be a gNB.

As shown in FIG. 4, a two-hop data backhaul scenario is used as an example. Backhaul is referred to as BH for short. An IAB network uses a CU-DU split architecture. In other words, an IAB donor includes two parts: an IAB donor-CU (referred to as a donor-CU for short) and an IAB donor-DU (referred to as a donor-DU for short); and an IAB node includes two parts: an IAB node-MT (referred to as an IAB-MT for short) and an IAB node-DU (referred to as an IAB-DU for short). The IAB node-mobile terminal (Mobile Terminal, MT) may also be referred to as IAB node-UE (referred to as IAB-UE for short).

For the IAB donor, a function of the donor-DU is similar to that of the gNB-DU, and a function of the donor-CU is similar to that of the gNB-CU.

For the IAB node, a function of the IAB-DU is similar to that of the gNB-DU, and the IAB-DU is configured to provide an access service for a child node of the IAB-DU. The child node of the IAB-DU may be UE, or may be another IAB node. The IAB-MT has a function of UE, and is configured to provide data backhaul for a child node of a co-site IAB-DU (that is, the IAB-DU and the IAB-MT belong to a same IAB node).

Further, the IAB node may be further classified into an access IAB node and an intermediate IAB node. To be specific, an IAB node accessed by the UE is referred to as the access IAB node, and an IAB node on a path between the access IAB node and the IAB donor is referred to as the intermediate IAB node. For example, as shown in FIG. 4, UE accesses an IAB node 2. The IAB node 2 is referred to as an access IAB node of the UE (or a parent node of the UE), the UE is referred to as a child node of the IAB node 2, and a link between the UE and the IAB node 2 is referred to as an access link. An IAB node 1 is referred to as an intermediate IAB node. A parent node of the IAB node 1 is an IAB donor (where a child node of the IAB donor is the IAB node 1). A child node of the IAB node 1 is the IAB node 2 (where a parent node of the IAB node 2 is the IAB node 1). A link between the IAB node 1 and the IAB node 2 and a link between the IAB node 1 and the IAB donor are all referred to as backhaul links. A peer PHY layer, MAC layer, and RLC layer of the UE are located on the access IAB node (namely, an IAB 2-DU), and a peer PDCP layer, SDAP layer, and RRC layer of the UE are located on a donor-CU. The IAB nodes both use an L2 data forwarding architecture. The following shows a specific user plane protocol stack and a specific control plane protocol stack.

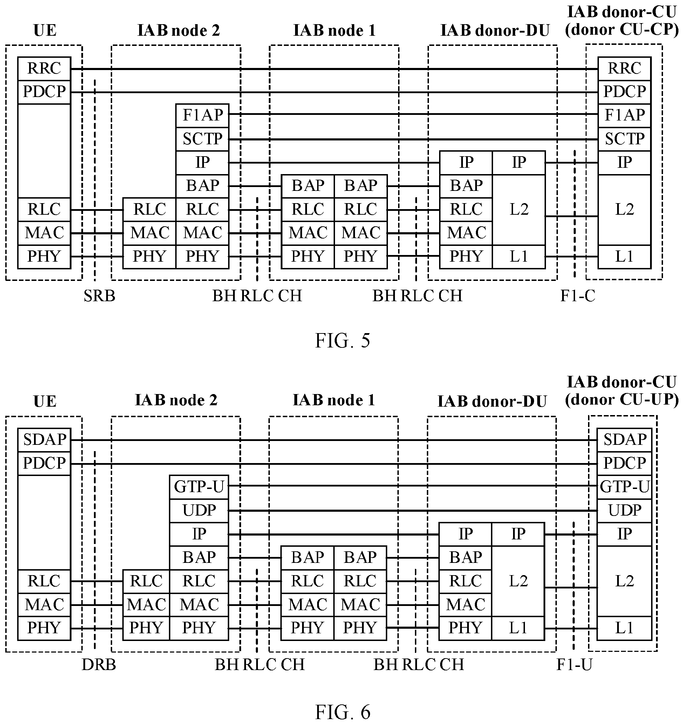

FIG. 5 shows a control plane protocol stack for two-hop data backhaul. An F1 interface is established between an access IAB node (namely, an IAB 2-DU) and an IAB donor (namely, a donor-CU). Specifically, if the IAB donor uses a CP-UP split architecture, an F1-C interface is established between the IAB 2-DU and a donor CU-CP. An RRC message of UE is encapsulated in an F1AP message of the F1-C interface for transmission.

FIG. 6 shows a user plane protocol stack for two-hop data backhaul. If an IAB donor uses a CP-UP split architecture, an F1-U interface is established between an IAB 2-DU and a donor CU-UP, and a GTP tunnel per UE bearer is established on the F1-U interface. In other words, each UE DRB established on an interface between UE and the IAB 2-DU corresponds to a separate GTP tunnel on the interface between the IAB 2-DU and the donor CU-UP.

Mobility refers to handover of UE from one cell to another. Therefore, usually, mobility may also be referred to as handover or migration (migration). Those are collectively referred to as handover in this application.

In 3GPP Rel-16 IAB, only an intra-donor-CU handover scenario is considered, and an inter-donor-CU handover scenario is not considered.

Intra-donor-CU handover refers to handover in a same donor-CU. Inter-donor-CU handover refers to handover between different donor-CUs. That is, a donor-CU does not change during the intra-donor-CU handover, and the handover is performed in the donor-CU. A donor-CU changes during the inter-donor-CU handover.

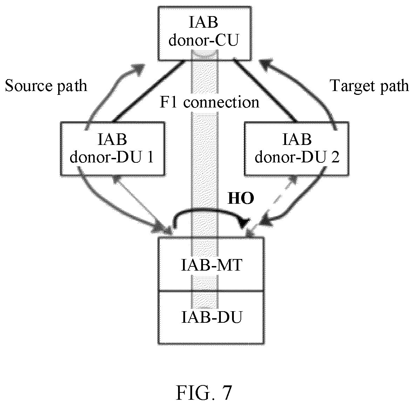

As shown in FIG. 7, in an intra-donor-CU handover scenario, an example in which an IAB node that is directly connected to an IAB donor is handed over is used for description. The IAB node that is handed over may be referred to as a handover IAB node or a migrating IAB node. Those are collectively referred to as a handover IAB node in this application.

This scenario may also be extended to a multi-hop scenario. To be specific, there is at least one other IAB node between a handover IAB node and an IAB donor.

The handover IAB node includes two parts: an IAB-MT and an IAB-DU. In this embodiment, the IAB-MT of the handover IAB node is collectively referred to as a handover IAB-MT, and the IAB-DU of the handover IAB node is collectively referred to as a handover IAB-DU. A downstream node (downstream node) of the handover IAB node includes a child node, a grandchild node (a child node of the child node), a descendant node of the grandchild node, and the like of the handover IAB node. The downstream node may be another IAB node, or may be UE.

Similar to UE, before IAB-MT handover, the IAB-MT is connected to a source IAB donor, that is, connected to an IAB donor-CU through an IAB donor-DU 1. After IAB-MT handover, the IAB-MT is connected to a target IAB donor, that is, connected to an IAB donor-CU through an IAB donor-DU 2.

Because the IAB donor-CU remains unchanged before and after IAB-MT handover, an F1 connection between the IAB-DU and the IAB donor-CU remains unchanged.

An internet protocol address (Internet Protocol Address, IP address) of the IAB-DU is allocated by an IAB donor-DU. That is, the IP address of the IAB-DU and an IP address of the IAB donor-DU belong to a same network segment or have a same network prefix. Therefore, once the IAB donor-DU changes, the IP address of the IAB-DU changes.

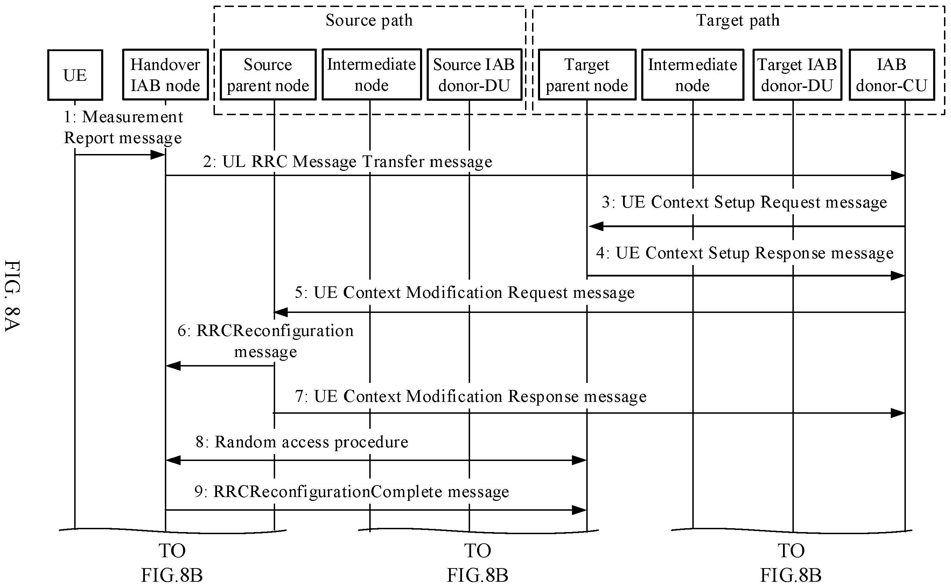

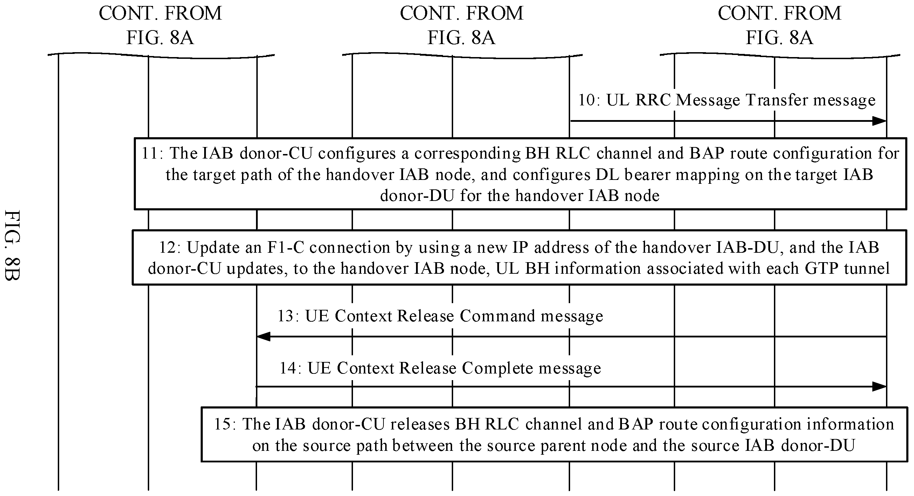

FIG. 8A and FIG. 8B are a schematic diagram of an IAB intra-donor-CU handover procedure. A multi-hop scenario (in which there is at least one other IAB node between a handover IAB node and an IAB donor-DU) is used as an example. A source path is a transmission path between a source parent node and a source IAB donor-DU. A target path is a transmission path between a target parent node and a target IAB donor-DU. The handover procedure is specifically as follows:
8-1: A handover IAB-MT sends an RRC message (namely, a MeasurementReport message) to an IAB-DU of the source parent node. The MeasurementReport message is a measurement report message.
8-2: The IAB-DU of the source parent node sends an F1AP message (namely, a UL RRC Message Transfer message) to an IAB donor-CU, where the message carries the MeasurementReport message. The UL RRC Message Transfer message is a UL RRC message transfer message.
8-3: The IAB donor-CU sends an F1AP message (namely, a UE Context Setup Request message) to an IAB-DU of a target parent node of a handover IAB node, to set up context information of the handover IAB-MT on the target parent node. The UE Context Setup Request message is a UE context setup request message.
8-4: The IAB-DU of the target parent node sends an F1AP message (namely, a UE Context Setup Response message) to the IAB donor-CU as a response. The UE Context Setup Response message is a UE context setup response message.
8-5: The IAB donor-CU sends an F1AP message (namely, a UE Context Modification Request message) to the IAB-DU of the source parent node, where the message carries an RRCReconfiguration message. The UE Context Modification Request message is a UE context modification request message. The RRCReconfiguration message is an RRC reconfiguration message.

The RRCReconfiguration message includes configurations of a default BH RLC channel (default bearer) and a default BAP routing ID (default route) used by the handover IAB-MT to transmit a UL F1-C/non-F1 service on the target path. The F1-C service refers to a UE-associated F1AP message and a non-UE associated F1AP message, and the non-F1 service refers to an application layer message established by the internet protocol security (Internet Protocol Security, IPsec), an application layer message established by a stream control transmission protocol (Stream Control Transmission Protocol, SCTP) association, an operation administration and maintenance (Operation Administration and Maintenance, OAM) service, or the like.

When the IAB donor-DU changes, the RRCReconfiguration message may further include an IP address allocated by the target IAB donor-DU to the handover IAB node (or a handover IAB-DU).

8-6: The IAB-DU of the source parent node forwards the received RRCReconfiguration message to the handover IAB-MT.

8-7: The IAB-DU of the source parent node sends an F1AP message (namely, a UE Context Modification Response message) to the IAB donor-CU as a response. The UE Context Modification Response message is a UE context modification response message.

8-8: The handover IAB-MT initiates a random access procedure to the IAB-DU of the target parent node.

8-9: The handover IAB-MT sends an RRCReconfigurationComplete message to the IAB-DU of the target parent node. The RRCReconfigurationComplete message is an RRC reconfiguration complete message.

8-10: The IAB-DU of the target parent node sends a UL RRC Message Transfer message to the IAB donor-CU. The message carries the RRCReconfigurationComplete message.

8-11: The IAB donor-CU configures a corresponding BH RLC channel and BAP route configuration for the target path of the handover IAB node, and configures DL bearer mapping on the target IAB donor-DU for the handover IAB node. The configuration process may be executed in advance, for example, executed immediately after step (8-3).

8-12: An F1-C connection is updated by using a new IP address of the handover IAB-DU, and the IAB donor-CU updates, to the handover IAB node, UL BH information associated with each GTP tunnel. That is, all F1-U tunnels are updated by using the new IP address of the handover IAB-DU.

8-13: The IAB donor-CU sends an F1AP message (namely, a UE Context Release Command message) to the IAB-DU of the source parent node. The UE Context Release Command message is a UE context release request message.

8-14: The IAB-DU of the source parent node releases a context of the handover IAB-MT, and sends an F1AP message (UE Context Release Complete message) to the IAB donor-CU as a response. The UE Context Release Complete message is a UE context release complete message.

8-15: The IAB donor-CU releases BH RLC channel and BAP route configuration information on the source path between the source parent node and the source IAB donor-DU.

It can be learned that, in the intra-donor-CU handover scenario, the F1 connection between the handover IAB-DU and the IAB donor-CU remains unchanged, and similarly, an F1 connection between a downstream node (for example, another IAB node) of the handover IAB node and the IAB donor-CU also remains unchanged. In other words, the handover IAB node, a child IAB node of the handover IAB node, or the like does not need to release an F 1 connection to the IAB donor-CU.

However, an inter-donor-CU handover scenario is also a typical handover scenario. In this scenario, an IAB donor-CU changes, and consequently an F1 connection to a handover IAB-DU changes (where in a current standard, one DU can be connected to one CU, to set up one F1 connection). To be specific, before handover, the handover IAB-DU sets up an F1 connection to a source IAB donor-CU. After handover, the handover IAB-DU needs to set up an F1 connection to a target IAB donor-CU and release the F1 connection to the source IAB donor-CU. Similarly, an F1 connection between a downstream node (for example, another IAB node) of a handover IAB node and the IAB donor-CU also changes. To be specific, the downstream node needs to release the F1 connection to the source IAB donor-CU.

Therefore, this application provides a method and apparatus for releasing an F 1 connection, and a system, to resolve a problem that an IAB node releases an F1 connection to a source IAB donor-CU in an inter-donor-CU handover scenario. The IAB node includes a handover IAB node and a downstream IAB node of the handover IAB node.

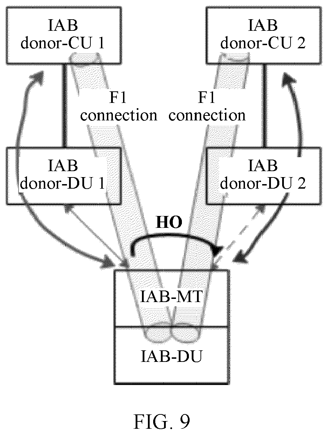

Application scenarios of this application mainly include:
Before IAB-MT handover, a handover IAB-MT is connected to a source IAB donor-CU (for example, an IAB donor-CU 1 in FIG. 9) through a source IAB donor-DU (for example, an IAB donor-DU 1 in FIG. 9). After IAB-MT handover, the handover IAB-MT is connected to a target IAB donor-CU (for example, an IAB donor-CU 2 in FIG. 9) through a target IAB donor-DU (for example, an IAB donor-DU 2 in FIG. 9).

The downstream node of the handover IAB node may be UE, or may be another IAB node.

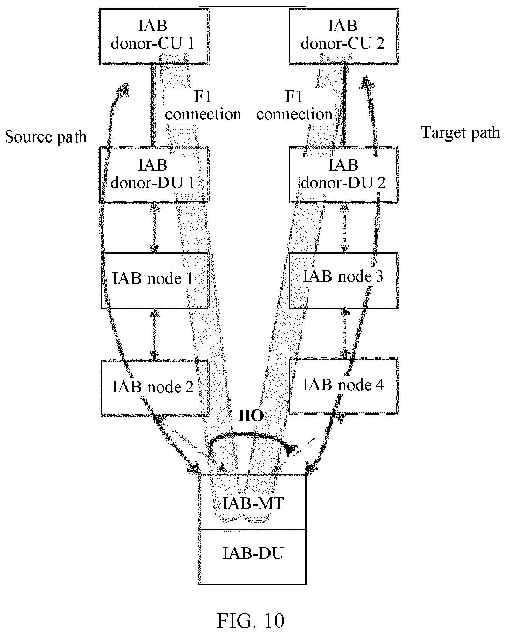

The foregoing scenario may be further extended. To be specific, there is at least one other IAB node between the handover IAB node and the IAB donor-DU. As shown in FIG. 10, before handover, an IAB node 1 and an IAB node 2 are other IAB nodes (which may be referred to as intermediate IAB nodes) between the handover IAB node and the source IAB donor-DU (for example, an IAB donor-DU 1 in FIG. 10), and an IAB node 3 and an IAB node 4 are other IAB nodes (which may be referred to as intermediate IAB nodes) between the handover IAB node and the target IAB donor-DU (for example, an IAB donor-DU 2 in FIG. 10).

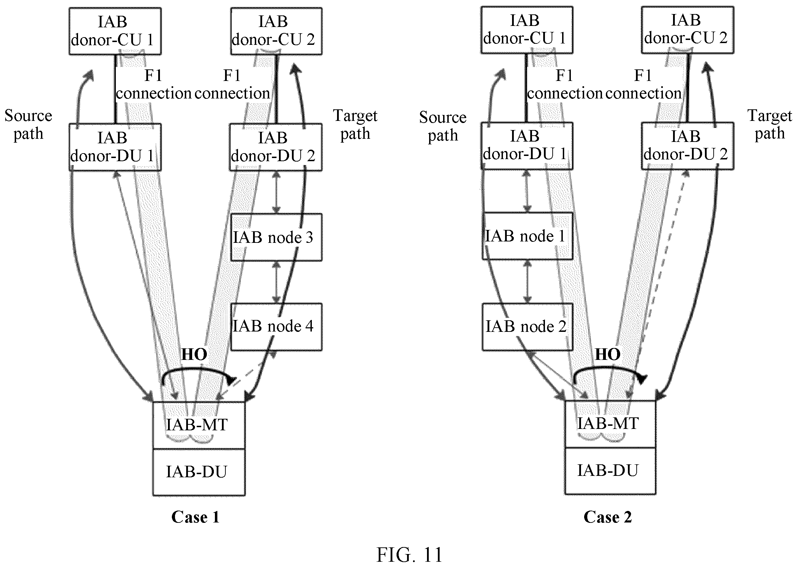

In addition, the foregoing scenario may be further extended. As shown in FIG. 11, the following two cases (examples) are specifically included.

Case 1: Before handover, the handover IAB-MT is directly connected to the source IAB donor-DU. After handover, the handover IAB-MT is connected to the target IAB donor-DU through the at least one other IAB node.

Case 2: Before handover, the handover IAB-MT is connected to the source IAB donor-DU through the at least one other IAB node. After handover, the handover IAB-MT is directly connected to the target IAB donor-DU.

In all the foregoing handover scenarios, a path between the handover IAB-MT and the source IAB donor-CU (for example, the IAB donor-CU 1 in FIG. 9 to FIG. 11) is referred to as a source path (namely, a Source Path), and a path between the handover IAB-MT and the target IAB donor-CU (for example, the IAB donor-CU 2 in FIG. 9 to FIG. 11) is referred to as a target path (namely, a Target Path). Alternatively, a path between the handover IAB-MT and the source IAB donor-DU (for example, the IAB donor-DU 1 in FIG. 9 to FIG. 11) is referred to as a source path, and a path between the handover IAB-MT and the target IAB donor-DU (for example, the IAB donor-DU 2 in FIG. 9 to FIG. 11) is referred to as a target path.

Network elements in this application include an IAB node and an IAB donor. The IAB node includes an IAB node-DU (referred to as an IAB-DU for short) and an IAB node-MT (referred to as an IAB-MT for short). The IAB donor includes an IAB donor-CU (referred to as a donor-CU for short) and an IAB donor-DU (referred to as a donor-DU for short).

For the IAB donor, a function of the donor-DU is similar to that of a gNB-DU, and the donor-DU mainly implements functions of L1 and L2 protocol stacks, including functions of a PHY layer/MAC layer/RLC layer. A function of the donor-CU is similar to that of a gNB-CU, and the donor-CU mainly implements functions of a PDCP layer/SDAP layer/RRC layer.

For the IAB node, a function of the IAB-DU is similar to that of the gNB-DU, and the IAB-DU is configured to provide an access service for a child node of the IAB-DU. The child node of the IAB-DU may be UE, or may be another IAB node. The IAB-MT has a function of UE, and is configured to provide data backhaul for a child node of a co-site IAB-DU.

Descriptions are provided below by using specific embodiments.

If radio access network (Radio Access Network, RAN) sharing (to be specific, one RAN device is shared by different operators) is not considered, one DU can be connected to only one CU. In an inter-donor-CU handover scenario, an IAB donor connected to an IAB node is handed over from a source IAB donor to a target IAB donor. Therefore, the IAB node needs to set up an F1 connection to the target IAB donor and delete/release an F1 connection to the source IAB donor. The IAB node includes a handover IAB node and a downstream IAB node (for example, a child node, a grandchild node, or a descendant node of the grandchild node) of the handover IAB node.

This application is described by using the handover scenario in FIG. 9 as an example. The solutions provided in this application are also applicable to the handover scenarios in FIG. 10 and FIG. 11.

In an IAB scenario, an IAB node includes an IAB-MT and an IAB-DU, and a source IAB donor includes a source IAB donor-DU and a source IAB donor-CU. That the IAB node deletes/releases an F1 connection to the source IAB donor means that the IAB-DU deletes/releases an F1 connection to the source IAB donor-CU. Herein, the F1 connection between the IAB-DU and the source IAB donor-CU is referred to as a source F1 connection. Specifically, the following several solutions are included.

Solution 1: The source IAB donor explicitly indicates the IAB node to delete/release the source F1 connection.

In a possible implementation, namely, Manner 1,
the source IAB donor may indicate, through a target IAB donor, the IAB node to delete/release the source F1 connection.

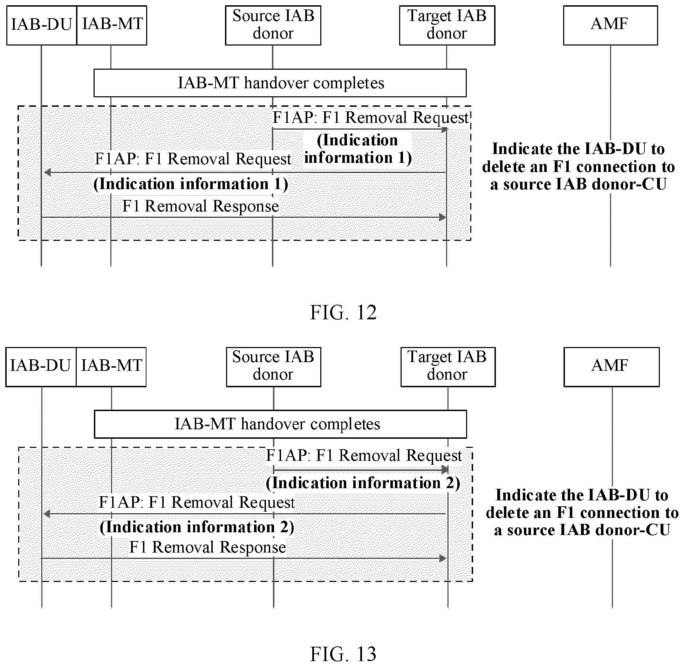

As shown in FIG. 12, after IAB-MT handover completes, for example, after the source IAB donor-CU receives a UE Context Release message sent by the target IAB donor, the source IAB donor-CU sends an F1AP message to the IAB-DU through the target IAB donor. After receiving the message, the IAB-DU deletes/releases the source F1 connection. The F1AP message may be an F1AP message, for example, an F1 Removal Request message, or may be a newly defined F1AP message.

Optionally, the F1AP message may carry indication information 1. The indication information 1 indicates that a donor-CU changes/updates, or indicates that an inter-CU is handed over, so that the IAB-DU subsequently triggers setup of an F1 connection to a target IAB donor-CU.

To assist the target IAB donor in performing correct routing and/or bearer mapping on the F1AP message sent by the source IAB donor-CU to the IAB-DU, before the source IAB donor-CU indicates, through the target IAB donor, the IAB-DU to delete/release the source F1 connection, the target IAB donor-CU sends, to the source IAB donor-CU, a mapping relationship between a user equipment-associated (User equipment-associated, UE-associated) F1AP type indication and a differentiated services code point (Differentiated Services Code Point, DSCP)/flow label (flow label) and/or a mapping relationship between a non-UE associated F1AP type indication and a DSCP/flow label. Specifically, the target IAB donor-CU sends, to the source IAB donor-CU, the following information:
one or both of an F1AP type indication and a DSCP/flow label, where the F1AP type indication includes a UE-associated F1AP type indication and/or a non-UE associated F1AP type indication, and the F1AP type indication corresponds to the DSCP/flow label.

The source IAB donor-CU indicates, through the target IAB donor, the IAB-DU to delete/release the source F1 connection. To be specific, the F1AP message sent by the source IAB donor-CU to the IAB-DU is encapsulated in an IP packet, and is routed to the IAB-DU through the target IAB donor-DU. The following several specific implementations are included.

Manner 1-1: A newly set up transport network layer (Transport Network Layer, TNL), namely, a first TNL association, is used.

Specifically, the F1AP message is sent based on the TNL association newly set up between the IAB-DU and the source IAB donor-CU.

In Manner 1-1, once the IAB-DU obtains an IP address allocated by the target IAB donor to the IAB-DU, the IAB-DU newly sets up the TNL association with the source IAB donor-CU. That is, an IP address corresponding to the newly set up TNL association includes an IP address of the source IAB donor-CU and an IP address allocated by the target IAB donor to the IAB node.

It should be noted that, in this application, the IP address allocated by the IAB donor to the IAB node is used by the IAB-DU.

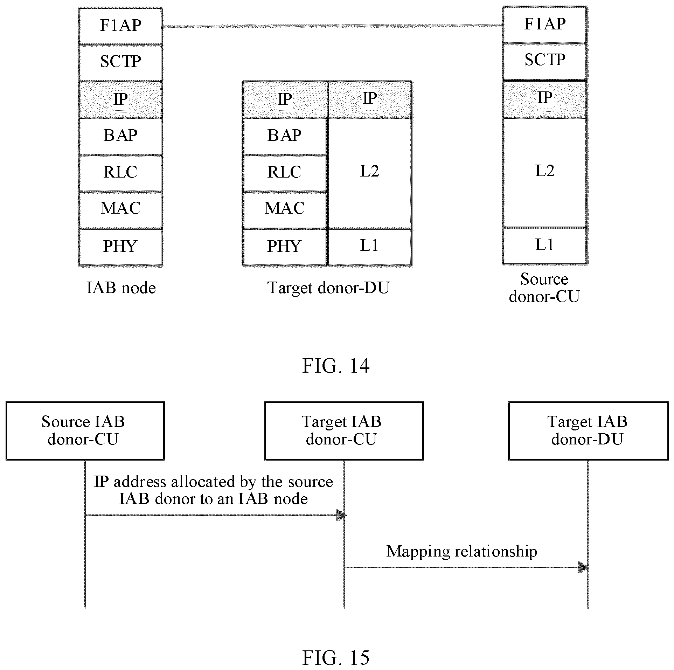

Optionally, to enable the IAB-DU to delete the F1 connection between the IAB-DU and the source IAB donor-CU after receiving the F1AP message sent by the source IAB donor-CU based on the newly set up TNL association, the F1AP message may further carry indication information 2, as shown in FIG. 13. The indication information 2 may implicitly or explicitly indicate to delete the source F1 connection. For example, the indication information 2 may be an IP address allocated by the source IAB donor to the IAB node, an identifier of the source IAB donor-CU (for example, a name of the source IAB donor-CU), or indication information indicating (explicitly indicating) to delete the source F1 connection. The IAB-DU deletes, based on the indication information 2, the F1 connection corresponding to the indication information. In addition, a protocol stack architecture corresponding to the foregoing Manner 1-1 is shown in FIG. 14.

Manner 1-2: An old TNL (namely, a second TNL association) is used.

Specifically, the F1AP message is sent based on the old TNL association between the IAB-DU and the source IAB donor-CU.

In Manner 1-2, an IP address corresponding to the old TNL association set up between the IAB-DU and the source IAB donor-CU includes an IP address of the source IAB donor-CU and an IP address allocated by the source IAB donor to the IAB node.

To enable the target IAB donor-DU to perform corresponding routing and bearer mapping based on an IP packet received from the source IAB donor-CU, the source IAB donor-CU needs to send, to the target IAB donor-CU, the IP address allocated by the source IAB donor to the IAB node, and the target IAB donor-CU configures a mapping relationship between the IP address allocated by the source IAB donor to the IAB node and a BAP address allocated by the target IAB donor-CU to the IAB node, and sends the mapping relationship to the target IAB donor-DU, as shown in FIG. 15. Specifically, the target IAB donor-CU sends, to the target IAB donor-DU, the IP address allocated by the source IAB donor to the IAB node and the BAP address allocated by the target IAB donor-CU to the IAB node, where there is a correspondence between the IP address allocated by the source IAB donor to the IAB node and the BAP address allocated by the target IAB donor-CU to the IAB node. In addition, a protocol stack architecture corresponding to the foregoing Manner 1-2 is the same as a protocol stack architecture corresponding to the foregoing Manner 1-1.

Manner 1-3: An IP-in-IP transmission manner is used, that is, IP encapsulation is performed twice.

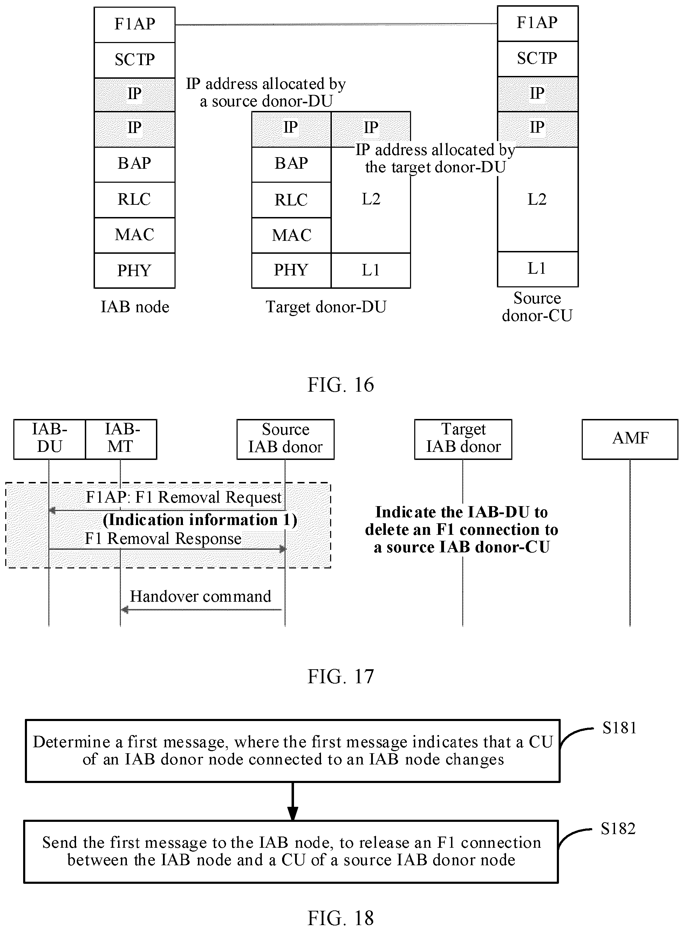

As shown in FIG. 16, IP encapsulation is performed twice on the F1AP message sent by the source IAB donor-CU to the IAB-DU. Downlink data transmission is used as an example. During the first IP (referred to as an outer IP for ease of description) encapsulation, a destination IP address is an IP address allocated by the source IAB donor to the IAB node, and a source IP address is an IP address of the source IAB donor-CU. During the second IP (referred to as an inner IP for ease of description) encapsulation, a destination IP address is an IP address allocated by the target IAB donor to the IAB node, and a source address is an IP address of the source IAB donor-CU.

To enable the source IAB donor-CU to learn of the IP address allocated by the target IAB donor to the IAB node, the target IAB donor-CU needs to send, to the source IAB donor-CU, the IP address allocated by the target IAB donor to the IAB node.

In another possible implementation, namely, Manner 2,
the source IAB donor may directly indicate the IAB node to delete/release the source F1 connection over a source path. As shown in FIG. 17, before the IAB-MT receives a handover command (or before handover is performed), the source IAB donor-CU sends an F1AP message to the IAB-DU. After receiving the message, the IAB-DU deletes/releases the source F1 connection. The F1AP message may be an F1AP message, for example, an F1 Removal Request message, or may be a newly defined F1AP message. Optionally, the F1AP message may further carry indication information 1. The indication information 1 indicates that a donor-CU changes/updates, or indicates that an inter-CU is handed over, so that the IAB-DU subsequently triggers setup of an F1 connection to a target IAB donor-CU.

Solution 2: Implicitly indicate the IAB node to delete/release the source F1 connection.

In a possible implementation, after the IAB-MT receives a handover command (that is, when an RRC reconfiguration message carries a ReconfigurationWithSync (synchronous reconfiguration) parameter), the IAB-MT notifies the IAB-DU through an internal interface, so that the IAB-DU automatically deletes/releases the source F1 connection.

In a possible implementation, after the IAB-DU receives a new configuration or a new configuration of the IAB-DU is activated, the IAB-DU automatically deletes/releases the source F1 connection. The new configuration is a configuration of the IAB-DU connected to the target IAB donor, and includes at least one of the following information: a new cell identity (for example, a Cell identity (cell identity) or a cell global identity (Cell Global Identity, CGI)) of a cell of the IAB-DU connected to the target IAB donor, and a system broadcast message of the cell of the IAB-DU. Optionally, the IAB-DU may obtain the new configuration from an OAM server, or the IAB-DU may obtain the new configuration from the target IAB donor.

In a possible implementation, the source IAB donor or the target IAB donor configures a timer for the IAB node. After the timer expires, the IAB-DU automatically deletes/releases the source F1 connection. Specifically, there are several possibilities for the IAB node to start the timer, including: once the IAB-MT receives the handover command, or once the IAB-DU receives the new configuration, the IAB node starts the timer; and the IAB-DU automatically deletes/releases the source F1 connection after the timer expires.

Next, FIG. 18 is a schematic flowchart of a method for releasing an F1 connection according to an embodiment of this application. The method for releasing an F 1 connection may be used for a source IAB donor node. The source IAB donor node includes a source donor-CU and a source donor-DU, for example, the IAB donor-CU 1 and the IAB donor-DU 1 in any inter-CU handover scenario in FIG. 9 to FIG. 11. As shown in FIG. 18, the method for releasing an F1 connection may include the following steps.

S181: Determine a first message, where the first message indicates that a CU of an IAB donor node connected to an IAB node changes.

Specifically, the source IAB donor node may be an IAB donor node connected to the IAB node before the CU of the IAB donor node connected to the IAB node changes.

The IAB node may be a handover IAB node, or may be a downstream node of the handover IAB node. The downstream node of the handover IAB node may include a child node, a grandchild node (a child node of the child node), a descendant node of the grandchild node, and the like of the handover IAB node. In addition, the downstream node may be another IAB node, or may be UE. The source IAB donor node may perform handover determining based on a measurement result reported by the handover IAB node, to determine whether the handover IAB node needs to be handed over from the source IAB donor node to a target IAB donor node. Therefore, the source IAB donor node may determine, based on a determining result, whether the CU of the IAB donor node connected to the IAB node changes.

In an embodiment, a message name of the first message may implicitly indicate that the CU of the IAB donor node connected to the IAB node changes. For example, the first message is an F1 Removal Request message, or a newly defined message (for example, an F1 Release Request message).

In another embodiment, information carried in the first message explicitly or implicitly indicates that the CU of the IAB donor node connected to the IAB node changes. For example, the first message includes first information, and the first information indicates that the CU of the IAB donor node connected to the IAB node changes or inter-donor CU handover occurs. For example, the first information may be the indication information 1 shown in FIG. 12.

In another embodiment, the first message may be anF1AP message. The F1AP message may be an F1AP message, for example, an F1 Removal Request message, or may be a newly defined F1AP message. Optionally, the F1AP message may carry first information, and the first information indicates that the CU of the IAB donor node connected to the IAB node changes or inter-donor CU handover occurs.

In another embodiment, the first message may be a handover command generated by the target IAB donor node (that is, an RRC reconfiguration message carries a ReconfigurationWithSync parameter). The handover command carries first information, and the first information indicates that the CU of the IAB donor node connected to the IAB node changes or inter-donor CU handover occurs.

In another embodiment, the first message may be a message for configuring configuration information for the DU of the IAB node connected to the target IAB donor node. The configuration information may include a new cell identity (for example, a Cell identity or a CGI) of a cell of the IAB-DU connected to the target IAB donor, and/or a system broadcast message of the cell of the IAB-DU. The configuration information may implicitly indicate that the CU of the IAB donor node connected to the IAB node changes or inter-donor CU handover occurs. Optionally, the configuration information may be provided by an OAM server, or may be provided by the target IAB donor node.

In another embodiment, the first message may further include information about duration of a timer. The duration of the timer may be configured by the source IAB donor node, or may be configured by the target IAB donor node, or may be pre-specified in a communication protocol. To be specific, after receiving the first message, the IAB node starts the timer; and then releases an F1 connection to the CU of the source IAB donor node after the timer expires. In this way, the IAB node reserves specific processing time before releasing the F1 connection, so that reliability of releasing the F1 connection can be improved.

S182: Send the first message to the IAB node, to release the F1 connection between the IAB node and the CU of the source IAB donor node.

Specifically, the F1 connection between the IAB node and the CU of the source IAB donor node may be referred to as a source F1 connection for short. An F1 connection between the IAB node and a CU of the target IAB donor node may be referred to as a target F1 connection for short.

In an embodiment, the source IAB donor may send the first message to the IAB node over a source path. For example, before the IAB node is handed over from the source path to a target path, the source IAB donor may send the first message to the IAB node over the source path. For example, as shown in FIG. 17, before an IAB-MT receives a handover command (or before handover is performed), a source IAB donor-CU sends an F1AP message to an IAB-DU. After receiving the message, the IAB-DU deletes/releases a source F1 connection.

In another embodiment, the source IAB donor node may send the first message to the IAB node through the target IAB donor node. For example, after the IAB node is handed over from a source path to a target path, the source IAB donor node may send the first message to the IAB node through the target IAB donor node.

The target IAB donor node may be an IAB donor node connected to the IAB node after the CU of the IAB donor node connected to the IAB node changes, for example, the IAB donor-CU 2 and the IAB donor-DU 2 in any inter-CU handover scenario in FIG. 9 to FIG. 11. In this application, that the source IAB donor node sends the first message to the IAB node through the target IAB donor node specifically means that the source IAB donor node sends the first message to the IAB node through a target IAB donor-DU (the IAB donor-DU 2 in any inter-CU handover scenario in FIG. 9 to FIG. 11). In other words, the first message is sent without passing through a target IAB donor-CU (the IAB donor-CU 2 in any inter-CU handover scenario in FIG. 9 to FIG. 11).

It should be understood that the source IAB donor node may first route the first message to the target IAB donor node by using a wired connection, and the target IAB donor node may further route and forward the first message to the IAB node over the target path after receiving the first message.

The source path may be a transmission path between a source parent node and the source IAB donor-CU, and the target path may be a transmission path between a target parent node and the target IAB donor-CU. For example, in FIG. 9 to FIG. 11, a path between a handover IAB-MT and an IAB donor-CU 1 is referred to as a source path (namely, a Source Path), and a path between the handover IAB-MT and an IAB donor-CU 2 is referred to as a target path (namely, a Target Path). Alternatively, the source path may be a transmission path between a source parent node and a source IAB donor-DU, and the target path may be a transmission path between a target parent node and a target IAB donor-DU. For example, in FIG. 9 to FIG. 11, a path between a handover IAB-MT and an IAB donor-DU 1 is referred to as a source path (namely, a Source Path), and a path between the handover IAB-MT and an IAB donor-DU 2 is referred to as a target path (namely, a Target Path).

For example, as shown in FIG. 12, after IAB-MT handover completes, for example, after the source IAB donor-CU receives a UE Context Release message sent by the target IAB donor, the source IAB donor-CU sends an F1AP message to the IAB-DU through the target IAB donor. After receiving the message, the IAB-DU deletes/releases the source F 1 connection. The F1AP message may be an F1AP message, for example, an F1 Removal Request message, or may be a newly defined F1AP message.

It can be learned from the foregoing embodiment that the first message is determined, where the first message indicates that the CU of the IAB donor node connected to the IAB node changes, and the first message is sent to the IAB node. In this way, the IAB node may release the F1 connection to the CU of the source IAB donor node according to the first message. Therefore, the IAB node releases the F1 connection in a timely manner based on an indication of the source IAB donor. This avoids resource waste caused because the F1 connection is not released in time, or terminal service interruption caused because the F1 connection is relased prematurely but a new F1 connection is not set up, so that reliability of releasing the F1 connection is improved, and IAB communication performance is ensured.

Further, in an embodiment, when sending the first message to the IAB node through the target IAB donor node, the source IAB donor node may set up a first TNL association with the IAB node, where the first TNL association corresponds to an IP address allocated by the target IAB donor node to the IAB node; and then send the first message to the IAB node through the target IAB donor node based on the first TNL association.

Specifically, on an IAB node side, the IAB node may set up the first TNL association with the source IAB donor based on the IP address allocated by the target IAB donor. In other words, the first TNL association is triggered by the IAB node, and is set up with the source IAB donor node. For a specific implementation process, refer to the newly set up TNL in the foregoing Manner 1-1.

Optionally, the first message sent based on the first TNL association may further include second information. The second information includes an IP address allocated by the source IAB donor node to the IAB node and/or an identifier of the CU of the source IAB donor node, or the second information includes indication information explicitly indicating the IAB node to delete the source F1 connection. For example, the second information may be the indication information 2 shown in FIG. 13.

In another embodiment, when sending the first message to the IAB node through the target IAB donor node, the source IAB donor node may send the first message by setting up a second TNL association with the IAB node, where the second TNL association corresponds to an IP address allocated by the source IAB donor node to the IAB node; and then send the first message to the IAB node through the target IAB donor node based on the second TNL association.

Specifically, the second TNL association is triggered by the IAB node, and is set up with the source IAB donor node. For a specific implementation process, refer to the old TNL in the foregoing Manner 1-2. It should be noted that, when the IAB node initially accesses the source IAB donor node, before setting up the source F1 connection to the source IAB donor node, the IAB node may set up the second TNL association with the source IAB donor node based on the IP address allocated by the source IAB donor node to the IAB node. When the IAB node performs handover, the source IAB donor node may send, based on the set up second TNL association, the first message to the IAB node through the target IAB donor node.

Optionally, before sending the first message to the IAB node through the target IAB donor node based on the second TNL association, the source IAB donor may further send, to the CU of the target IAB donor node, an IP address allocated by the source IAB donor node to the IAB node, where the IP address allocated by the source IAB donor node to the IAB node is for determining a mapping relationship, and the mapping relationship is a correspondence between an IP address allocated by the source IAB donor node to the IAB node and a BAP address allocated by the target IAB donor node to the IAB node. For example, the mapping relationship may be a mapping relationship shown in FIG. 15.

In another embodiment, when the source IAB donor sends the first message to the IAB node through the target IAB donor node, the first message may include an inner IP header and an outer IP header, an IP address of the IAB node included in the inner IP header corresponds to the target IAB donor node, and an IP address of the IAB node included in the outer IP header corresponds to the source IAB donor node. For a specific implementation process, refer to the IP-in-IP transmission manner in the foregoing Manner 1-3, to be specific, the source IAB donor performs IP encapsulation twice on the first message.

It should be understood that, herein, an inner layer refers to the second IP encapsulation processing, and an outer layer refers to the first IP encapsulation processing. Optionally, the IP address of the IAB node included in the inner layer may be an IP address allocated by the target IAB donor node, and the IP address of the IAB node included in the outer layer may be an IP address allocated by the source IAB donor node. For example, as shown in FIG. 16, IP encapsulation is performed twice on the F1AP message sent by the source IAB donor-CU to the IAB-DU. Downlink data transmission is used as an example. During the first IP encapsulation, a destination IP address is an IP address allocated by the source IAB donor to the IAB node, and a source IP address is an IP address of the source IAB donor-CU. During the second IP encapsulation, a destination IP address is an IP address allocated by the target IAB donor to the IAB node, and a source address is an IP address of the source IAB donor-CU.

It can be learned from the foregoing embodiment that, when sending the first message to the IAB node through the target IAB donor node, the source IAB donor may send the first message to the IAB node by using a plurality of implementations such as the first TNL association, the second TNL association, and the IP-in-IP transmission manner, namely, two IP encapsulation. This enriches diversity of manners of sending the first message, and meets personalized requirements of different communication functions.

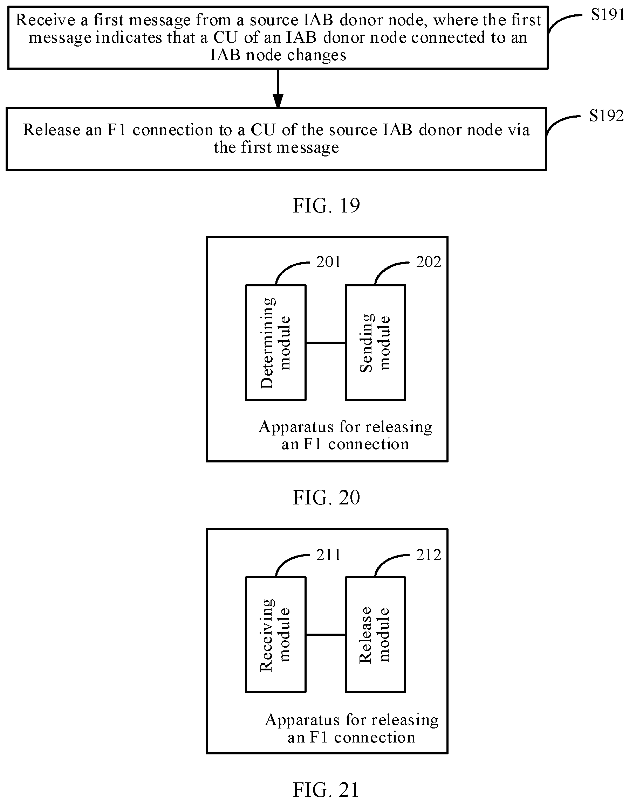

FIG. 19 is a schematic flowchart of a method for releasing an F1 connection according to an embodiment of this application. The method for releasing an F1 connection may be used for an IAB node. The IAB node includes an IAB-MT and an IAB-DU, for example, the IAB-MT and the IAB-DU in any inter-CU handover scenario in FIG. 9 to FIG. 11. As shown in FIG. 19, the method for releasing an F1 connection may include the following steps.

S191: Receive a first message from a source IAB donor node, where the first message indicates that a CU of an IAB donor node connected to the IAB node changes.

Specifically, the source IAB donor node may be an IAB donor node connected to the IAB node before the CU of the IAB donor node connected to the IAB node changes.

The IAB node may be a handover IAB node, or may be a downstream node of the handover IAB node. The downstream node of the handover IAB node may include a child node, a grandchild node (a child node of the child node), a descendant node of the grandchild node, and the like of the handover IAB node. In addition, the downstream node may be another IAB node, or may be UE.

### For the first message:

In an embodiment, a message name of the first message may implicitly indicate that the CU of the IAB donor node connected to the IAB node changes. For example, the first message is an F1 Removal Request message, or a newly defined message (for example, an F1 Release Request message).

In another embodiment, information carried in the first message explicitly or implicitly indicates that the CU of the IAB donor node connected to the IAB node changes. For example, the first message includes first information, and the first information indicates that the CU of the IAB donor node connected to the IAB node changes or inter-donor CU handover occurs. For example, the first information may be the indication information 1 shown in FIG. 12.

In another embodiment, the first message may be an F1AP message. The F1AP message may be an F1AP message, for example, an F1 Removal Request message, or may be a newly defined F1AP message. Optionally, the F1AP message may carry first information, and the first information indicates that the CU of the IAB donor node connected to the IAB node changes or inter-donor CU handover occurs.

In another embodiment, the first message may be a handover command generated by a target IAB donor node (that is, an RRC reconfiguration message carries a ReconfigurationWithSync parameter). The handover command carries first information, and the first information indicates that the CU of the IAB donor node connected to the IAB node changes or inter-donor CU handover occurs.

In another embodiment, the first message may be a message for configuring configuration information for the DU of the IAB node connected to the target IAB donor node. The configuration information may include a new cell identity (for example, a Cell identity or a CGI) of a cell of the IAB-DU connected to the target IAB donor, and/or a system broadcast message of the cell of the IAB-DU. The configuration information may implicitly indicate that the CU of the IAB donor node connected to the IAB node changes or inter-donor CU handover occurs. Optionally, the configuration information may be provided by an OAM server, or may be provided by the target IAB donor node.

### For a receiving manner:

In an embodiment, the IAB node may receive the first message from the source IAB donor node over a source path. For example, before the IAB node is handed over from the source path to a target path, the IAB node may receive the first message from the source IAB donor node over the source path. For example, as shown in FIG. 17, before an IAB-MT receives a handover command (or before handover is performed), a source IAB donor-CU sends an F1AP message to an IAB-DU. After receiving the message, the IAB-DU deletes/releases a source F1 connection.

In another embodiment, the IAB node may receive the first message from the source IAB donor node through the target IAB donor node. For example, after the IAB node is handed over from a source path to a target path, the IAB node may receive the first message from the source IAB donor node through the target IAB donor node.

The target IAB donor node may be an IAB donor node connected to the IAB node after the CU of the IAB donor node connected to the IAB node changes. For example, the target IAB donor node is the IAB donor-CU 2 and the IAB donor-DU 2 in any inter-CU handover scenario in FIG. 9 to FIG. 11. In this application, that the source IAB donor node sends the first message to the IAB node through the target IAB donor node specifically means that the source IAB donor node sends the first message to the IAB node through a target IAB donor-DU (the IAB donor-DU 2 in any inter-CU handover scenario in FIG. 9 to FIG. 11). In other words, the first message is sent without passing through a target IAB donor-CU (the IAB donor-CU 2 in any inter-CU handover scenario in FIG. 9 to FIG. 11).

It should be understood that because the source IAB donor node may first route the first message to the target IAB donor node by using a wired connection, and the target IAB donor node may further route and forward the first message to the IAB node over the target path after receiving the first message, the IAB node may receive the first message from the source IAB donor node through the target IAB donor node.

The source path may be a transmission path between a source parent node and the source IAB donor-CU, and the target path may be a transmission path between a target parent node and the target IAB donor-CU. For example, in FIG. 9 to FIG. 11, a path between a handover IAB-MT and an IAB donor-CU 1 is referred to as a source path (namely, a Source Path), and a path between the handover IAB-MT and an IAB donor-CU 2 is referred to as a target path (namely, a Target Path). Alternatively, the source path may be a transmission path between a source parent node and a source IAB donor-DU, and the target path may be a transmission path between a target parent node and a target IAB donor-DU. For example, in FIG. 9 to FIG. 11, a path between a handover IAB-MT and an IAB donor-DU 1 is referred to as a source path (namely, a Source Path), and a path between the handover IAB-MT and an IAB donor-DU 2 is referred to as a target path (namely, a Target Path).

For example, as shown in FIG. 12, after IAB-MT handover completes, for example, after the source IAB donor-CU receives a UE Context Release message sent by the target IAB donor, the source IAB donor-CU sends an F1AP message to the IAB-DU through the target IAB donor. After receiving the message, the IAB-DU deletes/releases the source F1 connection. The F1AP message may be an F1AP message, for example, an F1 Removal Request message, or may be a newly defined F1AP message.

S192: Release an F1 connection to a CU of the source IAB donor node according to the first message.

Specifically, after receiving the first message, the IAB node may choose, based on an actual situation, to immediately release the F1 connection to the CU of the source IAB donor node, or may choose to release the F1 connection to the CU of the source IAB donor node after a delay of specific time.

In an embodiment, the IAB node may start a timer; and release the F1 connection to the CU of the source IAB donor node after the timer expires. In this way, the IAB node reserves specific processing time before releasing the source F1 connection, so that reliability of releasing the source F1 connection is improved. Duration of the timer may be configured by the source IAB donor node, or may be configured by the target IAB donor node, or may be pre-specified in a communication protocol.

In another embodiment, the first message includes information about duration of a timer. In this way, the IAB node may obtain the duration of the timer according to the first message, then start the corresponding timer based on the duration, and release the F1 connection to the CU of the source IAB donor node after the corresponding timer expires.

It can be learned from the foregoing embodiment that the first message sent by the source IAB donor node is received, where the first message indicates that the CU of the IAB donor node connected to the IAB node changes, and the F1 connection to the CU of the source IAB donor node is released according to the first message. Therefore, the IAB node releases the F1 connection in a timely manner based on an indication of the source IAB donor. This avoids resource waste caused because the F1 connection is not released in time, or terminal service interruption caused because the F1 connection is relased prematurely but a new F1 connection is not set up, so that reliability of releasing the F1 connection is improved, and IAB communication performance is ensured.

Further, in an embodiment, when receiving the first message from the source IAB donor node through the target IAB donor node, the IAB node may set up a first TNL association with the source IAB donor node based on an IP address allocated by the target IAB donor node to the IAB node; and then receive the first message from the source IAB donor node through the target IAB donor node based on the first TNL association.

Specifically, on an IAB node side, the IAB node may set up the first TNL association with the source IAB donor based on the IP address allocated by the target IAB donor. In other words, the first TNL association is triggered by the IAB node, and is set up with the source IAB donor node. For a specific implementation process, refer to the newly set up TNL in the foregoing Manner 1-1.

Optionally, the first message received based on the first TNL association may further include second information. The second information includes an IP address allocated by the source IAB donor node to the IAB node and/or an identifier of the CU of the source IAB donor node, or the second information includes indication information explicitly indicating the IAB node to delete the source F1 connection. For example, the second information may be the indication information 2 shown in FIG. 13.

In another embodiment, when receiving the first message from the source IAB donor node through the target IAB donor node, the IAB node may set up a second TNL association with the source IAB donor node based on an IP address allocated by the source IAB donor node to the IAB node; and receive the first message from the source IAB donor node through the target IAB donor node based on the second TNL association.

Specifically, the second TNL association is triggered by the IAB node, and is set up with the source IAB donor node. For a specific implementation process, refer to the old TNL in the foregoing Manner 1-2. It should be noted that, when the IAB node initially accesses the source IAB donor node, before setting up the source F1 connection to the source IAB donor node, the IAB node may set up the second TNL association with the source IAB donor node based on the IP address allocated by the source IAB donor node to the IAB node. When the IAB node performs handover, the source IAB donor node may send, based on the set up second TNL association, the first message to the IAB node through the target IAB donor node.

In another embodiment, when the IAB node receives the first message from the source IAB donor node through the target IAB donor node, the first message may include an inner IP header and an outer IP header, an IP address of the IAB node included in the inner IP header corresponds to the target IAB donor node, and an IP address of the IAB node included in the outer IP header corresponds to the source IAB donor node. For a specific implementation process, refer to the IP-in-IP transmission manner in the foregoing Manner 1-3, to be specific, the source IAB donor node performs IP encapsulation twice on the first message.

It should be understood that, herein, an inner layer refers to the second IP encapsulation processing, and an outer layer refers to the first IP encapsulation processing. Optionally, the IP address of the IAB node included in the inner layer may be an IP address allocated by the target IAB donor node, and the IP address of the IAB node included in the outer layer may be an IP address allocated by the source IAB donor node. For example, as shown in FIG. 16, IP encapsulation is performed twice on the F1AP message sent by the source IAB donor-CU to the IAB-DU. Downlink data transmission is used as an example. During the first IP encapsulation, a destination IP address is an IP address allocated by the source IAB donor to the IAB node, and a source IP address is an IP address of the source IAB donor-CU. During the second IP encapsulation, a destination IP address is an IP address allocated by the target IAB donor to the IAB node, and a source address is an IP address of the source IAB donor-CU.

It can be learned from the foregoing embodiment that, when receiving the first message from the source IAB donor node through the target IAB donor node, the IAB node may receive the first message from the source IAB donor node by using a plurality of implementations such as the first TNL association, the second TNL association, and the IP-in-IP transmission manner, namely, two IP encapsulation. This enriches diversity of manners of receiving the first message, and meets personalized requirements of different communication functions.

FIG. 20 is a schematic diagram of a structure of an apparatus for releasing an F1 connection according to an embodiment of this application. The apparatus for releasing an F1 connection may be used in a source IAB donor node. The source IAB donor node includes a source donor-CU and a source donor-DU, for example, the IAB donor-CU 1 and the IAB donor-DU 1 in any inter-CU handover scenario in FIG. 9 to FIG. 11. As shown in FIG. 20, the apparatus for releasing an F1 connection may include:
a determining module 201, configured to determine a first message, where the first message indicates that a CU of an IAB donor node connected to an IAB node changes; and
a sending module 202, configured to send the first message to the IAB node, to release an F1 connection between the IAB node and a CU of the source IAB donor node, where
the source IAB donor node is an IAB donor node connected to the IAB node before the CU of the IAB donor node connected to the IAB node changes.

Specifically, the source IAB donor node may be the IAB donor node connected to the IAB node before the CU of the IAB donor node connected to the IAB node changes. The IAB node may be a handover IAB node, or may be a downstream node of the handover IAB node. The downstream node of the handover IAB node may include a child node, a grandchild node (a child node of the child node), a descendant node of the grandchild node, and the like of the handover IAB node. In addition, the downstream node may be another IAB node, or may be UE. The source IAB donor node may perform handover determining based on a measurement result reported by the handover IAB node, to determine whether the handover IAB node needs to be handed over from the source IAB donor node to a target IAB donor node. Therefore, the source IAB donor node may determine, based on a determining result, whether the CU of the IAB donor node connected to the IAB node changes. In an embodiment, a message name of the first message may implicitly indicate that the CU of the IAB donor node connected to the IAB node changes. For example, the first message is an F1 Removal Request message (an existing F1AP message), or a newly defined message (for example, an F1 Release Request message).

In a possible implementation, the first message includes first information, and the first information indicates that the CU of the IAB donor node connected to the IAB node changes or inter-donor CU handover occurs.

Specifically, information carried in the first message explicitly or implicitly indicates that the CU of the IAB donor node connected to the IAB node changes. For example, the first message includes first information, and the first information indicates that the CU of the IAB donor node connected to the IAB node changes or inter-donor CU handover occurs. For example, the first information may be the indication information 1 shown in FIG. 12.

In a possible implementation, the first message is an F1 application protocol F1AP message.

Specifically, the F1AP message may be an F1AP message, for example, an F1 Removal Request message, or may be a newly defined F1AP message. Optionally, the F1AP message may carry first information, and the first information indicates that the CU of the IAB donor node connected to the IAB node changes or inter-donor CU handover occurs.

In a possible implementation, the sending module 202 includes:
a sending submodule, configured to send the first message to the IAB node through the target IAB donor node, where
the target IAB donor node is an IAB donor node connected to the IAB node after the CU of the IAB donor node connected to the IAB node changes. For example, the target IAB donor node is the IAB donor-CU 2 and the IAB donor-DU 2 in any inter-CU handover scenario in FIG. 9 to FIG. 11. In this application, that the source IAB donor node sends the first message to the IAB node through the target IAB donor node specifically means that the source IAB donor node sends the first message to the IAB node through a target IAB donor-DU (the IAB donor-DU 2 in any inter-CU handover scenario in FIG. 9 to FIG. 11). In other words, the first message is sent without passing through a target IAB donor-CU (the IAB donor-CU 2 in any inter-CU handover scenario in FIG. 9 to FIG. 11).

It should be understood that the source IAB donor node may first route the first message to the target IAB donor node by using a wired connection, and the target IAB donor node may further route and forward the first message to the IAB node over the target path after receiving the first message.

In a possible implementation, the sending submodule includes:
a first association unit, configured to set up a first TNL association with the IAB node based on an IP address allocated by the target IAB donor node to the IAB node; and
a first sending unit, configured to send the first message to the IAB node through the target IAB donor node based on the first TNL association.

Specifically, on an IAB node side, the IAB node may set up the first TNL association with the source IAB donor based on the IP address allocated by the target IAB donor. In other words, the first TNL association is triggered by the IAB node, and is set up with the source IAB donor node. For a specific implementation process, refer to the newly set up TNL in the foregoing Manner 1-1.

In a possible implementation, the first message further includes second information, and the second information includes an IP address allocated by the source IAB donor node to the IAB node and/or an identifier of the CU of the source IAB donor node.

Specifically, the first message sent based on the first TNL association may further include the second information. The second information includes the IP address allocated by the source IAB donor node to the IAB node and/or the identifier of the CU of the source IAB donor node, or the second information includes indication information explicitly indicating the IAB node to delete a source F1 connection. For example, the second information may be the indication information 2 shown in FIG. 13.

In a possible implementation, the sending submodule includes:
a second association unit, configured to set up a second TNL association with the IAB donor node based on an IP address allocated by the source IAB donor node to the IAB node; and
a second sending unit, configured to send the first message to the IAB node through the target IAB donor node based on the second TNL association.

Specifically, the second TNL association is triggered by the IAB node, and is set up with the source IAB donor node. For a specific implementation process, refer to the old TNL in the foregoing Manner 1-2. It should be noted that, when the IAB node initially accesses the source IAB donor node, before setting up the source F1 connection to the source IAB donor node, the IAB node may set up the second TNL association with the source IAB donor node based on the IP address allocated by the source IAB donor node to the IAB node. When the IAB node performs handover, the source IAB donor node may send, based on the set up second TNL association, the first message to the IAB node through the target IAB donor node.

In a possible implementation, the sending submodule further includes:
a third sending unit, configured to send, to a CU of the target IAB donor node, the IP address allocated by the source IAB donor node to the IAB node, where the IP address allocated by the source IAB donor node to the IAB node is used for determining a mapping relationship, where
the mapping relationship is a correspondence between the IP address allocated by the source IAB donor node to the IAB node and a backhaul adaptation protocol BAP address allocated by the target IAB donor node to the IAB node.

Specifically, before sending the first message to the IAB node through the target IAB donor node based on the second TNL association, the source IAB donor may further send, to the CU of the target IAB donor node, an IP address allocated by the source IAB donor node to the IAB node.

In a possible implementation, the first message includes an inner IP header and an outer IP header, an IP address of the IAB node included in the inner IP header corresponds to the target IAB donor node, and an IP address of the IAB node included in the outer IP header corresponds to the source IAB donor node.

It should be understood that, herein, an inner layer refers to the second IP encapsulation processing, and an outer layer refers to the first IP encapsulation processing. Optionally, the IP address of the IAB node included in the inner layer may be an IP address allocated by the target IAB donor node, and the IP address of the IAB node included in the outer layer may be an IP address allocated by the source IAB donor node. For example, as shown in FIG. 16, IP encapsulation is performed twice on the F1AP message sent by the source IAB donor-CU to the IAB-DU. Downlink data transmission is used as an example. During the first IP encapsulation, a destination IP address is an IP address allocated by the source IAB donor to the IAB node, and a source IP address is an IP address of the source IAB donor-CU. During the second IP encapsulation, a destination IP address is an IP address allocated by the target IAB donor to the IAB node, and a source address is an IP address of the source IAB donor-CU.

In a possible implementation, the first message further includes information about duration of a timer.

Specifically, the duration of the timer may be configured by the source IAB donor node, or may be configured by the target IAB donor node, or may be pre-specified in a communication protocol. To be specific, after receiving the first message, the IAB node starts the timer; and then releases an F1 connection to the CU of the source IAB donor node after the timer expires. In this way, the IAB node reserves specific processing time before releasing the F1 connection, so that reliability of releasing the F1 connection can be improved.

It should be understood that the apparatus is configured to perform the method for releasing an F1 connection on a source IAB donor node side in the foregoing embodiments. An implementation principle and a technical effect of a corresponding program module in the apparatus are similar to those described in the method for releasing an F1 connection on the source IAB donor node side. For a working process of the apparatus, refer to a corresponding process in the method for releasing an F1 connection on the source IAB donor node side. Details are not described herein again.

FIG. 21 is a schematic diagram of a structure of an apparatus for releasing an F1 connection according to an embodiment of this application. The apparatus for releasing an F1 connection may be used in an IAB node. The IAB node includes an IAB-MT and an IAB-DU, for example, the IAB-MT and the IAB-DU in any inter-CU handover scenario in FIG. 9 to FIG. 11. As shown in FIG. 21, the apparatus for releasing an F1 connection may include:
a receiving module 211, configured to receive a first message from a source IAB donor node, where the first message indicates that a CU of an IAB donor node connected to the IAB node changes; and
a release module 212, configured to release an F1 connection to a CU of the source IAB donor node according to the first message, where
the source IAB donor node is an IAB donor node connected to the IAB node before the CU of the IAB donor node connected to the IAB node changes.

Specifically, the source IAB donor node may be an IAB donor node connected to the IAB node before the CU of the IAB donor node connected to the IAB node changes. The IAB node may be a handover IAB node, or may be a downstream node of the handover IAB node. The downstream node of the handover IAB node may include a child node, a grandchild node (a child node of the child node), a descendant node of the grandchild node, and the like of the handover IAB node. In addition, the downstream node may be another IAB node, or may be UE. In an embodiment, a message name of the first message may implicitly indicate that the CU of the IAB donor node connected to the IAB node changes. For example, the first message is an F1 Removal Request message (an existing F1AP message), or a newly defined message (for example, an F1 Release Request message).

In a possible implementation, the first message includes first information, and the first information indicates that the CU of the IAB donor node connected to the IAB node changes or inter-donor CU handover occurs.

Specifically, information carried in the first message explicitly or implicitly indicates that the CU of the IAB donor node connected to the IAB node changes. For example, the first message includes first information, and the first information indicates that the CU of the IAB donor node connected to the IAB node changes or inter-donor CU handover occurs. For example, the first information may be the indication information 1 shown in FIG. 12.

In a possible implementation, the first message is an F1AP message.

Specifically, the F1AP message may be an F1AP message, for example, an F1 Removal Request message, or may be a newly defined F1AP message. Optionally, the F1AP message may carry first information, and the first information indicates that the CU of the IAB donor node connected to the IAB node changes or inter-donor CU handover occurs. In a possible implementation, the receiving module 211 includes:
a receiving submodule, configured to receive the first message from the source IAB donor node through a target IAB donor node, where
the target IAB donor node is an IAB donor node connected to the IAB node after the CU of the IAB donor node connected to the IAB node changes. For example, the target IAB donor node is the IAB donor-CU 2 and the IAB donor-DU 2 in any inter-CU handover scenario in FIG. 9 to FIG. 11. In this application, that the source IAB donor node sends the first message to the IAB node through the target IAB donor node specifically means that the source IAB donor node sends the first message to the IAB node through a target IAB donor-DU (the IAB donor-DU 2 in any inter-CU handover scenario in FIG. 9 to FIG. 11). In other words, the first message is sent without passing through a target IAB donor-CU (the IAB donor-CU 2 in any inter-CU handover scenario in FIG. 9 to FIG. 11).

It should be understood that because the source IAB donor node may first route the first message to the target IAB donor node by using a wired connection, and the target IAB donor node may further route and forward the first message to the IAB node over the target path after receiving the first message, the IAB node may receive the first message from the source IAB donor node through the target IAB donor node.

In a possible implementation, the receiving submodule includes:
a first setup unit, configured to set up a first TNL association with the source IAB donor node based on an IP address allocated by the target IAB donor node to the IAB node; and
a first receiving unit, configured to receive the first message from the source IAB donor node through the target IAB donor node based on the first TNL association.

Specifically, on an IAB node side, the IAB node may set up the first TNL association with the source IAB donor based on the IP address allocated by the target IAB donor. In other words, the first TNL association is triggered by the IAB node, and is set up with the source IAB donor node. For a specific implementation process, refer to the newly set up TNL in the foregoing Manner 1-1.

In a possible implementation, the first message further includes second information, and the second information includes an IP address allocated by the source IAB donor node to the IAB node and/or an identifier of the CU of the source IAB donor node.

Specifically, the first message received based on the first TNL association may further include the second information. The second information includes the IP address allocated by the source IAB donor node to the IAB node and/or the identifier of the CU of the source IAB donor node, or the second information includes indication information explicitly indicating the IAB node to delete a source F1 connection. For example, the second information may be the indication information 2 shown in FIG. 13.

In a possible implementation, the receiving submodule includes:
a second setup unit, configured to set up a second TNL association with the source IAB donor node based on an IP address allocated by the source IAB donor node to the IAB node; and
a second receiving unit, configured to receive the first message from the source IAB donor node through the target IAB donor node based on the second TNL association.

The second TNL association is triggered by the IAB node, and is set up with the source IAB donor node. For a specific implementation process, refer to the old TNL in the foregoing Manner 1-2. It should be noted that, when the IAB node initially accesses the source IAB donor node, before setting up the source F1 connection to the source IAB donor node, the IAB node may set up the second TNL association with the source IAB donor node based on the IP address allocated by the source IAB donor node to the IAB node. When the IAB node performs handover, the source IAB donor node may send, based on the set up second TNL association, the first message to the IAB node through the target IAB donor node.

In a possible implementation, the first message includes an inner IP header and an outer IP header, an IP address of the IAB node included in the inner IP header corresponds to the source IAB donor node, and an IP address of the IAB node included in the outer IP header corresponds to the target IAB donor node.

It should be understood that, herein, an inner layer refers to the second IP encapsulation processing, and an outer layer refers to the first IP encapsulation processing. Optionally, the IP address of the IAB node included in the inner layer may be an IP address allocated by the target IAB donor node, and the IP address of the IAB node included in the outer layer may be an IP address allocated by the source IAB donor node. For example, as shown in FIG. 16, IP encapsulation is performed twice on the F1AP message sent by the source IAB donor-CU to the IAB-DU. Downlink data transmission is used as an example. During the first IP encapsulation, a destination IP address is an IP address allocated by the source IAB donor to the IAB node, and a source IP address is an IP address of the source IAB donor-CU. During the second IP encapsulation, a destination IP address is an IP address allocated by the target IAB donor to the IAB node, and a source address is an IP address of the source IAB donor-CU.

In a possible implementation, the release module 212 includes:
a startup submodule, configured to start a timer; and
a release submodule, configured to release the F 1 connection to the CU of the source IAB donor node after the timer expires.

Specifically, the IAB node may start a timer; and release the F1 connection to the CU of the source IAB donor node after the timer expires. In this way, the IAB node reserves specific processing time before releasing the source F1 connection, so that reliability of releasing the source F1 connection is improved. Duration of the timer may be configured by the source IAB donor node, or may be configured by the target IAB donor node, or may be pre-specified in a communication protocol.

In a possible implementation, the first message further includes information about duration of the timer.

It should be understood that the IAB node may obtain the duration of the timer according to the first message, then start the corresponding timer based on the duration, and release the F1 connection to the CU of the source IAB donor node after the corresponding timer expires. It should be understood that the apparatus is configured to perform the method for releasing an F1 connection on an IAB donor side in the foregoing embodiments. An implementation principle and a technical effect of a corresponding program module in the apparatus are similar to those described in the method for releasing an F1 connection on the IAB donor side. For a working process of the apparatus, refer to a corresponding process in the method for releasing an F1 connection on the IAB donor side. Details are not described herein again.

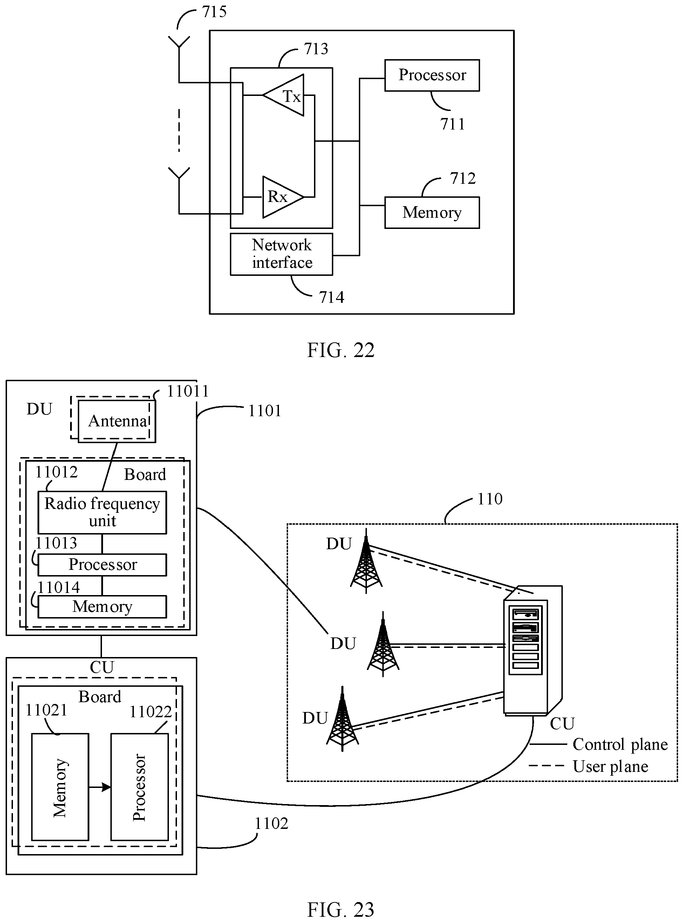

FIG. 22 is a schematic diagram of a structure of a communication apparatus according to an embodiment of this application. The communication apparatus may be an IAB donor node (for example, a source donor node or a target donor node in embodiments of this application), and may implement functions of the IAB donor node in the foregoing method embodiments. Alternatively, the communication apparatus may be an IAB node, and may implement functions of the IAB node in the foregoing method embodiments. For ease of description, FIG. 22 shows main components of the communication apparatus. As shown in FIG. 22:

The communication apparatus includes at least one processor 711, at least one memory 712, at least one transceiver 713, at least one network interface 714, and one or more antennas 715. The processor 711, the memory 712, the transceiver 713, and the network interface 714 are connected to each other, for example, through a bus. In this embodiment of this application, the connection may include various types of interfaces, transmission lines, buses, or the like. This is not limited in this embodiment. The antenna 715 is connected to the transceiver 713. The network interface 714 is configured to enable the communication apparatus to be connected to another network device through a communication link.

The processor 711 is mainly configured to: process a communication protocol and communication data, control the entire node, execute a software program, and process data of the software program.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. Alternatively, the processor may integrate functions of the baseband processor and the central processing unit. A person skilled in the art may understand that the baseband processor and the central processing unit may be processors independent of each other, and are interconnected through technologies such as a bus. A person skilled in the art may understand that the node may include a plurality of baseband processors to adapt to different network standards, and the node may include a plurality of central processing units to enhance a processing capability of the node. The components of the node may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program. The processor executes the software program to implement a baseband processing function.

The memory 712 is mainly configured to store the software program and data. The memory 712 may exist independently, and is connected to the processor 711. Optionally, the memory 712 and the processor 711 may be integrated together, for example, integrated on a single chip, that is, is an on-chip memory; or the memory 712 is an independent storage element. This is not limited in this embodiment of this application. The memory 712 can store program code for executing the technical solutions in embodiments of this application, and the processor 711 controls the execution. Various types of computer program code that are executed may also be considered as drivers of the processor 711.

The transceiver 713 may be configured to perform conversion between a baseband signal and a radio frequency signal and process the radio frequency signal. The transceiver 713 may be connected to the antenna 715. The transceiver 713 includes a transmitter (transmitter, Tx) and a receiver (receiver, Rx). Specifically, the one or more antennas 715 may receive the radio frequency signal. The receiver Rx of the transceiver 713 is configured to: receive the radio frequency signal from the antenna, convert the radio frequency signal into a digital baseband signal or a digital intermediate frequency signal, and provide the digital baseband signal or the digital intermediate frequency signal for the processor 711, so that the processor 711 further processes, for example, demodulates and decodes, the digital baseband signal or the digital intermediate frequency signal. In addition, the transmitter Tx of the transceiver 713 is configured to: receive a modulated digital baseband signal or a modulated digital intermediate frequency signal from the processor 711, convert the modulated digital baseband signal or the modulated digital intermediate frequency signal into a radio frequency signal, and send the radio frequency signal through the one or more antennas 715. Specifically, the receiver Rx may selectively perform one or more levels of frequency down-mixing processing and analog-to-digital conversion processing on the radio frequency signal to obtain the digital baseband signal or the digital intermediate frequency signal. A sequence of the frequency down-mixing processing and the analog-to-digital conversion processing is adjustable. The transmitter Tx may selectively perform one or more levels of frequency up-mixing processing and digital-to-analog conversion processing on the modulated digital baseband signal or the modulated digital intermediate frequency signal to obtain the radio frequency signal. A sequence of the frequency up-mixing processing and the digital-to-analog conversion processing is adjustable. The digital baseband signal and the digital intermediate frequency signal may be collectively referred to as a digital signal. Optionally, the transmitter Tx and the receiver Rx may be implemented by different physical structures/circuits; or may be implemented by a same physical structure/circuit, in other words, the transmitter Tx and the receiver Rx may be inherited together.

The transceiver may also be referred to as a transceiver unit, a transceiver apparatus, or the like. Optionally, a component that is configured to implement a receiving function and that is in the transceiver unit may be considered as a receiving unit, and a component that is configured to implement a sending function and that is in the transceiver unit may be considered as a sending unit. That is, the transceiver unit includes the receiving unit and the sending unit. The receiving unit may also be referred to as a receiver, an input port, a receiving circuit, or the like. The sending unit may be referred to as a transmitter, a transmitting circuit, or the like. Alternatively, the Tx, the Rx, and the antenna may be combined into a transceiver.

In FIG. 22, if the communication apparatus is a source IAB donor node, the source IAB donor node may communicate with a target IAB donor node through a network interface, to complete information and/or message receiving and sending between the source IAB donor node and the target IAB donor node in embodiments of this application; and the source IAB donor node may communicate with an IAB node through the transceiver and the antenna, to complete information and/or message sending and receiving between the source IAB donor node and the IAB node in embodiments of this application. If the communication apparatus is an IAB node, the IAB node may communicate with a source IAB donor node or a target IAB donor node through the transceiver and the antenna, to complete information and/or message receiving and sending between the IAB node and the source IAB donor node or the target IAB donor node. For specific information and/or a specific message, refer to the content in the foregoing embodiments. Details are not described herein again.

FIG. 23 is a schematic diagram of a structure of a communication device according to an embodiment of this application. The communication device may be an IAB donor node (for example, a source donor node or a target donor node in embodiments of this application), and may implement functions of the IAB donor node in the foregoing method embodiments. The communication device may be in a CU-DU split architecture. As shown in FIG. 23, the communication device may include one or more DUs 1101 and one or more CUs 1102. The DU 1101 may include at least one antenna 11011, at least one radio frequency unit 11012, at least one processor 11013, and at least one memory 11014. The DU 1101 is mainly configured to: receive and send a radio frequency signal, perform conversion between the radio frequency signal and a baseband signal, and perform some baseband processing. The CU 1102 may include at least one processor 11022 and at least one memory 11021. The CU 1102 and the DU 1101 may communicate with each other through an interface. A control plane (control plane) interface may be F1-C, and a user plane (user Plane) interface may be F1-U.

The CU 1102 is mainly configured to: perform baseband processing, control the base station, and the like. The DU 1101 and the CU 1102 may be physically disposed together; or may be physically disposed separately, that is, in a distributed base station. The CU 1102 is a control center of the base station, may also be referred to as a processing unit, and is mainly configured to complete a baseband processing function. For example, the CU 1102 may be configured to control the communication device to perform an operation procedure in the foregoing method embodiments.

Specifically, baseband processing on the CU and the DU may be divided based on protocol layers of a wireless network. For details, refer to the foregoing content.

In an example, the CU 1102 may include one or more boards. A plurality of boards may jointly support a radio access network (for example, a 5G network) of a single access standard, or may separately support radio access networks (such as an LTE network, a 5G network, or another access network) of different access standards. The memory 11021 and the processor 11022 may serve one or more boards. In other words, a memory and a processor may be independently disposed on each board, or a plurality of boards may share a same memory and a same processor. In addition, a necessary circuit may be further configured on each board. The DU 1101 may include one or more boards. A plurality of boards may jointly support a radio access network (for example, a 5G network) of a single access standard, or may separately support radio access networks (such as an LTE network, a 5G network, or another access network) of different access standards. The memory 11014 and the processor 11013 may serve one or more boards. In other words, a memory and a processor may be independently disposed on each board, or a plurality of boards may share a same memory and a same processor. In addition, a necessary circuit may be further configured on each board.

Optionally, the CU 1102 may perform transmission with an IAB node through the DU 1101. The CU 1102 may be connected to another communication device through an interface. The CU 1102 may receive data and/or a message from the another communication device (for example, a CU of the another communication device) through the interface, or may send data and/or a message to the another communication device through the interface.

For example, if the communication device is a source donor node, the CU 1102 may send and receive a message and/or information through an interface between the CU 1102 and a target donor node, and may send and receive a message and/or information with an IAB node through the DU 1101. If the communication device is a target donor node, the CU 1102 may send and receive a message and/or information through an interface between the CU 1102 and a source donor node, and may send and receive a message and/or information with an IAB node through the DU 1101. For specific information and/or a specific message, refer to content in the foregoing embodiments. Details are not described herein again.

An embodiment of this application further provides a communication system, including two or more of a source IAB donor node, a target IAB donor node, and an IAB node. The source IAB donor node may perform a method for releasing an F1 connection on a source IAB donor node side, and the IAB node may perform a method for releasing an F1 connection on an IAB node side.

An embodiment of this application further provides a computer storage medium. The computer storage medium includes computer instructions. When the computer instructions are run on a source IAB donor node, the source IAB donor node is enabled to perform a method for releasing an F1 connection on a source IAB donor node side.

An embodiment of this application further provides a computer storage medium. The computer storage medium includes computer instructions. When the computer instructions are run on an IAB node, the IAB node is enabled to perform a method for releasing an F1 connection on an IAB node side.

It may be noted that the processor in embodiments of this application may be a central processing unit (central processing unit, CPU), may be another general-purpose processor, a digital signal processor (digital signal processor, DSP), an application-specific integrated circuit (application-specific integrated circuit, ASIC), a field programmable gate array (field programmable gate array, FPGA) or another programmable logic component, a transistor logic device, a hardware component, or a combination thereof. The general-purpose processor may be a microprocessor or any conventional processor.

The method steps in embodiments of this application may be implemented by hardware, or may be implemented by the processor by executing software instructions. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, the storage medium is coupled to the processor, so that the processor can read information from the storage medium and write information into the storage medium. Certainly, the storage medium may alternatively be a component of the processor. The processor and the storage medium may be located in an ASIC.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted by using a computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

It may be understood that various numbers in embodiments of this application are merely used for differentiation for ease of description, and are not used to limit the scope of embodiments of this application.

## Claims

1. A method for releasing an F1 connection, wherein the method is used for an integrated access and backhaul IAB node, and the method comprises:
receiving a first message from a source IAB donor node, wherein the first message indicates that a central unit CU of an IAB donor node connected to the IAB node changes; and
releasing an F1 connection to a CU of the source IAB donor node according to the first message, wherein
the source IAB donor node is an IAB donor node connected to the IAB node before the CU of the IAB donor node connected to the IAB node changes.

2. The method according to claim 1, wherein the first message comprises first information, and the first information indicates that the CU of the IAB donor node connected to the IAB node changes or inter-donor CU handover occurs.

3. The method according to claim 1 or 2, wherein the first message is an F1 application protocol F1AP message.

4. The method according to claim 1 or 2, wherein the receiving a first message from a source IAB donor node comprises:
receiving the first message from the source IAB donor node through a target IAB donor node, wherein
the target IAB donor node is an IAB donor node connected to the IAB node after the CU of the IAB donor node connected to the IAB node changes.

5. The method according to claim 4, wherein the receiving the first message from the source IAB donor node through a target IAB donor node comprises:
setting up a first transport network layer TNL association with the source IAB donor node based on an IP address allocated by the target IAB donor node to the IAB node; and
receiving the first message from the source IAB donor node through the target IAB donor node based on the first TNL association.

6. The method according to claim 5, wherein the first message further comprises second information, and the second information comprises an internet protocol IP address allocated by the source IAB donor node to the IAB node and/or an identifier of the CU of the source IAB donor node.

7. The method according to claim 4, wherein the receiving the first message from the source IAB donor node through a target IAB donor node comprises:
setting up a second TNL association with the source IAB donor node based on an IP address allocated by the source IAB donor node to the IAB node; and
receiving the first message from the source IAB donor node through the target IAB donor node based on the second TNL association.

8. The method according to claim 4, wherein the first message comprises an inner IP header and an outer IP header, an IP address of the IAB node comprised in the inner IP header corresponds to the target IAB donor node, and an IP address of the IAB node comprised in the outer IP header corresponds to the source IAB donor node.

9. The method according to claim 1 or 2, wherein the releasing an F1 connection to a CU of the source IAB donor node according to the first message comprises:
starting a timer; and
releasing the F1 connection to the CU of the source IAB donor node after the timer expires.

10. The method according to claim 9, wherein the first message further comprises information about duration of the timer.

11. A method for releasing an F1 connection, wherein the method is used for a source integrated access and backhaul IAB donor node, and the method comprises:
determining a first message, wherein the first message indicates that a central unit CU of an IAB donor node connected to an IAB node changes; and
sending the first message to the IAB node, to release an F1 connection between the IAB node and a CU of the source IAB donor node, wherein
the source IAB donor node is an IAB donor node connected to the IAB node before the CU of the IAB donor node connected to the IAB node changes.

12. The method according to claim 11, wherein the first message comprises first information, and the first information indicates that the CU of the IAB donor node connected to the IAB node changes or inter-donor CU handover occurs.

13. The method according to claim 11 or 12, wherein the first message is an F1 application protocol F1AP message.

14. The method according to claim 11 or 12, wherein the sending the first message to the IAB node comprises:
sending the first message to the IAB node through a target IAB donor node, wherein
the target IAB donor node is an IAB donor node connected to the IAB node after the CU of the IAB donor node connected to the IAB node changes.

15. The method according to claim 14, wherein the sending the first message to the IAB node through a target IAB donor node comprises:
setting up a first transport network layer TNL association with the IAB node, wherein the first TNL association corresponds to an IP address allocated by the target IAB donor node to the IAB node; and
sending the first message to the IAB node through the target IAB donor node based on the first TNL association.

16. The method according to claim 15, wherein the first message further comprises second information, and the second information comprises an internet protocol IP address allocated by the source IAB donor node to the IAB node and/or an identifier of the CU of the source IAB donor node.

17. The method according to claim 14, wherein the sending the first message to the IAB node through a target IAB donor node comprises:
setting up a second TNL association with the IAB node, wherein the second TNL association corresponds to an IP address allocated by the source IAB donor node to the IAB node; and
sending the first message to the IAB node through the target IAB donor node based on the second TNL association.

18. The method according to claim 17, further comprising:
sending, to a CU of the target IAB donor node, the IP address allocated by the source IAB donor node to the IAB node, wherein the IP address allocated by the source IAB donor node to the IAB node is used for determining a mapping relationship, wherein
the mapping relationship is a correspondence between the IP address allocated by the source IAB donor node to the IAB node and a backhaul adaptation protocol BAP address allocated by the target IAB donor node to the IAB node.

19. The method according to claim 14, wherein the first message comprises an inner IP header and an outer IP header, an IP address of the IAB node comprised in the inner IP header corresponds to the target IAB donor node, and an IP address of the IAB node comprised in the outer IP header corresponds to the source IAB donor node.

20. The method according to claim 11 or 12, wherein the first message further comprises information about duration of a timer.

21. An apparatus for releasing an F1 connection, wherein the apparatus is used in an integrated access and backhaul IAB node, and the apparatus comprises:
a receiving module, configured to receive a first message from a source IAB donor node, wherein the first message indicates that a central unit CU of an IAB donor node connected to the IAB node changes; and
a release module, configured to release an F1 connection to a CU of the source IAB donor node according to the first message, wherein
the source IAB donor node is an IAB donor node connected to the IAB node before the CU of the IAB donor node connected to the IAB node changes.

22. An apparatus for releasing an F1 connection, wherein the apparatus is used in a source integrated access and backhaul IAB donor node, and the apparatus comprises:
a determining module, configured to determine a first message, wherein the first message indicates that a CU of an IAB donor node connected to an IAB node changes; and
a sending module, configured to send the first message to the IAB node, to release an F1 connection between the IAB node and a CU of the source IAB donor node, wherein
the source IAB donor node is an IAB donor node connected to the IAB node before the CU of the IAB donor node connected to the IAB node changes.

23. A communication apparatus, wherein the communication apparatus comprises a processor, and the processor is coupled to a memory, wherein
the memory is configured to store computer instructions; and
the processor is configured to execute the computer instructions, to perform the method according to any one of claims 1 to 10.

24. A communication apparatus, wherein the communication apparatus comprises a processor, and the processor is coupled to a memory, wherein
the memory is configured to store computer instructions; and
the processor is configured to execute the computer instructions, to perform the method according to any one of claims 11 to 20.

25. A communication system, comprising two or more of an IAB node, a source IAB donor node, and a target IAB donor node, wherein the IAB node is configured to perform the method according to any one of claims 1 to 10, and the source IAB donor node is configured to perform the method according to any one of claims 11 to 20.

26. A computer storage medium, wherein the computer storage medium comprises computer instructions, and when the computer instructions are run, the method according to any one of claims 1 to 10 is performed.

27. A computer storage medium, wherein the computer storage medium comprises computer instructions, and when the computer instructions are run, the method according to any one of claims 11 to 20 is performed.

28. An apparatus, wherein the apparatus is configured to perform the method according to any one of claims 1 to 20.
